(19) **Europäisches Patentamt**
**European Patent Office**
**Office européen des brevets**

(11) **EP 1 825 631 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **05814582.2**

(22) Anmeldetag: **12.12.2005**

(51) Int Cl.:
*H04L 7/10* (2006.01)       *H04L 7/04* (2006.01)
*H04L 27/26* (2006.01)       *H04B 1/16* (2006.01)

(86) Internationale Anmeldenummer:
**PCT/EP2005/013303**

(87) Internationale Veröffentlichungsnummer:
**WO 2006/063769 (22.06.2006 Gazette 2006/25)**

(54) **SYNCHRONISATIONSVORRICHTUNG UND VORRICHTUNG ZUM ERZEUGEN EINES SYNCHRONISATIONSSIGNALS**

SYNCHRONISATION DEVICE AND DEVICE FOR GENERATION OF A SYNCHRONISATION SIGNAL

DISPOSITIF DE SYNCHRONISATION ET DISPOSITIF POUR PRODUIRE UN SIGNAL DE SYNCHRONISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059957**

(43) Veröffentlichungstag der Anmeldung:
**29.08.2007 Patentblatt 2007/35**

(73) Patentinhaber: **Fraunhofer-Gesellschaft zur Förderung der angewandten Forschung e.V. 80686 München (DE)**

(72) Erfinder:
• **WAGNER, Carmen**
  **91094 Langensendelbach (DE)**
• **KÖHLER, Stefan**
  **96472 Rödental (DE)**
• **STADALI, Holger**
  **91058 Erlangen (DE)**
• **HOFMANN, Günter**
  **96123 Litzendorf (DE)**
• **BREILING, Marco**
  **91052 Erlangen (DE)**

(74) Vertreter: **Golkowsky, Stefan et al Pfenning, Meinig & Partner GbR Patent- und Rechtsanwälte Joachimstaler Strasse 10-12 10719 Berlin (DE)**

(56) Entgegenhaltungen:
**EP-A- 1 206 068       EP-A- 1 322 061
WO-A-87/01490       US-A- 4 803 703
US-A- 5 343 497       US-A- 5 373 536
US-A- 5 960 047       US-A1- 2002 114 354**

## Beschreibung

Die vorliegende Erfindung bezieht sich auf die Synchronisation eines Empfängers und eines Senders in digitalen Übertragungssystemen.

In digitalen Übertragungssystemen werden die zu übertragenden Informationsbits zu Informationsblöcken zusammengefasst, wobei ein Informationsblock einer Rahmenstruktur entspricht. Jeder Informationsblock umfasst neben den Informationsbits eine Anzahl von Zusatzinformationsbits, die für eine Abwicklung der Datenübertragung notwendig sind.

Da mit einem Empfänger die ausgesendete Information detektiert werden kann, muss neben einer Wiedergewinnung eines Abtasttaktes festgestellt werden, zu welchem Zeitpunkt ein jeweiliger Informationsblock empfangen wird. Mit anderen Worten ausgedrückt muss im Empfänger eine Blocksynchronisation durchgeführt werden, um den Empfänger und um den Sender relativ zueinander zu synchronisieren. Aus dem Stand der Technik bekannte Verfahren dazu ergeben sich z.B. aus den Druckschriften US 4,803,703 und EP 1 206 068 A2, die die Merkmale der Oberbegriffe der unabhängigen Ansprüche offenbaren.

Um eine Synchronisation zu erzielen sendet ein Sender beispielsweise ein Synchronisationssignal aus, das dem Empfänger bekannt ist. Im Empfänger wird ein Empfangssignal, das das Synchronisationssignal umfasst, verarbeitet, um eine Position des Synchronisationssignals in dem Empfangssignal, bzw. um einen Zeitpunkt des Auftretens des Synchronisationssignals, zu erfassen. Hierzu kann beispielsweise eine Kreuzkorrelation zwischen dem Empfangssignal und einer Kopie des Synchronisationssignals durchgeführt werden, um das Synchronisationssignal in dem Empfangssignal aufzufinden. Da es für eine genaue Positionsbestimmung notwendig ist, ein breitbandiges Synchronisationssignal auszusenden, ist die Positionsbestimmung mit einer erheblichen Rechenkomplexität verbunden, da stets breitbandige Signale in einem hohen Abtasttakt verarbeitet werden müssen.

Soll beispielsweise auf ein sehr breitbandiges digitales Signal (HF-Bandbreite B) synchronisiert werden, das heißt, sollen entweder feste bekannte Synchronisationssignale (Präambeln) in einem fortlaufenden Empfangssignal gefunden werden oder sollen feste bekannte Präambeln innerhalb von Signalabschnitten (Signalbursts) gefunden werden, so muss das Empfangsignal aufgrund des Abtasttheorems mindestens mit Bandbreite B abgetastet und verarbeitet werden, um die Synchronisationssignale zu finden. Wenn der Sender oder der Empfänger gerade eingeschaltet worden sind, dann liegt beispielsweise noch keinerlei Information darüber vor, wo sich das Synchronisationssignal (Präambel) befinden könnte.

Aus diesem Grund muss das gesamte Empfangssignal über einen längeren Zeitraum mit der hohen Bandbreite B abgetastet und verarbeitet werden. Wird beispielsweise bei einer Bandbreite von 77 MHz mit 100 MHz abgetastet, so müssen zum Auffinden der Präambel ohne Vorinformation 100 Millionen Tests pro Sekunde hinsichtlich des Präambelstarts, also hinsichtlich eines Anfangs der Präambel in dem Empfangssignal, durchgeführt werden. Wird in jedem Test beispielsweise eine Kreuzkorrelation durchgeführt, so beinhaltet jeder Test sehr viele Rechenoperationen, zu deren Durchführung erhebliche Systemressourcen notwendig sind. Dieser Aufwand macht z. B. die direkte und blinde (online) Suche einer Präambel in einem breitbandigen Signal unmöglich.

Es ist die Aufgabe der vorliegenden Erfindung, ein aufwandsreduziertes Synchronisationskonzept zu schaffen.

Diese Aufgabe wird durch eine Synchronisationsvorrichtung gemäß Anspruch 1 oder durch eine Vorrichtung zum Synchronisieren eines Empfängers und eines Senders gemäß Anspruch 23 oder durch eine Vorrichtung zum Erzeugen eines Synchronisationssignals gemäß Anspruch 24 oder durch ein Synchronisationsverfahren gemäß Anspruch 40 oder durch ein Verfahren zum Synchronisieren eines Empfängers und eines Senders gemäß Anspruch 41 oder durch ein Verfahren zum Erzeugen eines Synchronisationssignals gemäß Anspruch 42 oder durch ein Computerprogramm gemäß Anspruch 43 gelöst.

Der vorliegenden Erfindung liegt die Erkenntnis zugrunde, dass eine Synchronisation eines Empfängers und eines Senders aufwandsreduziert und effizient durchgeführt werden kann, wenn die Synchronisation zweistufig durchgeführt wird. Erfindungsgemäß wird zunächst eine Grobsynchronisation auf der Basis eines Grobsynchronisationssignals, das schmalbandig ist durchgeführt, wobei das Grobsynchronisationssignal ein Teil eines Synchronisationssignals ist. Erfindungsgemäß wird auf diese Weise zunächst ein Abschnitt eines Empfangssignals erfasst, in dem das Synchronisationssignal liegt. Da das Grobsynchronisationssignal schmalbandig ist, kann Grobsynchronisation mit einer niedrigen Verarbeitungsrate kosteneffizient durchgeführt werden. Dementsprechend sieht die Erfindung vor, dass das Empfangssignal gefiltert wird, um eine Empfangssignal-Komponente, die einen Teilfrequenzbereich hat, dessen Bandbreite kleiner ist als die bandbreite eines Feinsynchronisationssignals, aus dem Empfangssignal herauszufiltern. In einer zweiten Stufe wird in dem erfassten Abschnitt des Empfangssignals nach dem breitbandigen Feinsynchronisationssignal, das ebenfalls von dem Synchronisationssignal umfasst ist, gesucht, um eine Position des Feinsynchronisationssignals in dem Abschnitt des Empfangssignals genau zu bestimmen, um das Synchronisationssignal in dem Empfangssignal genau zu lokalisieren. Da das Feinsynchronisationssignal breitbandiger als das Grobsynchronisationssignal ist, wird die Feinsynchronisation, das heißt, die genaue Bestimmung der Position des Synchronisationssignals in dem Empfangssignal, mit einer höheren Verarbeitungsrate als bei dem Grobsynchronisationssignal durchgeführt.

Das erfindungsgemäße Synchronisationskonzept basiert darauf, dass ein Synchronisationssignal, das von einem Sender aussendbar ist, auf dem Grobsynchronisationssignal und auf dem Feinsynchronisationssignal basiert. Bevorzugt umfasst das Synchronisationssignal das Grobsynchronisationssignal und das Feinsynchronisationssignal, wobei das Feinsynchronisationssignal bevorzugt zeitlich nach dem Grobsynchronisationssignal aussendbar ist und wobei das Feinsynchronisationssignal eine größere Bandbreite als das Grobsynchronisationssignal hat.

Um die Position des Synchronisationssignals in dem Empfangssignal für eine Synchronisation zu bestimmen, schafft die vorliegende Erfindung eine Signalverarbeitungseinrichtung, die ausgebildet ist, um basierend auf dem Grobsynchronisationssignal den Abschnitt des Empfangssignals zu bestimmen, indem das Feinsynchronisationssignal liegt, und um basierend auf dem Feinsynchronisationssignal in dem Abschnitt des Empfangssignals die Position des Synchronisationssignals in dem Empfangssignal für eine Synchronisation zu bestimmen. Diese Signalverarbeitungseinrichtung umfasst insbesondere ein Filter zum Filtern des Empfangssignals in zuvor beschriebenen weise.

Bevorzugt ist die Signalverarbeitungseinrichtung ausgebildet, um das Grobsynchronisationssignal in dem Empfangssignal zu detektieren, um den Abschnitt des Empfangssignals zu bestimmen. Der Abschnitt des Empfangssignals wird beispielsweise durch einen Zeitpunkt einer Detektion des Grobsynchronisationssignals (Detektionszeitpunkt) bestimmt. Um die Position des Synchronisationssignals in dem Empfangssignal zu bestimmen, ist die Signalverarbeitungseinrichtung gebildet, um das Feinsynchronisationssignal in dem Abschnitt des Empfangssignals, der auf der Basis des Grobsynchronisationssignals ungefähr bestimmt worden ist, zu detektieren.

Da das Grobsynchronisationssignal erfindungsgemäß eine Bandbreite aufweist, die geringer als eine Bandbreite des Feinsynchronisationssignals ist, kann die Detektion des Grobsynchronisationssignals mit einer niedrigen Verarbeitungsrate durchgeführt werden, um Signalverarbeitungsressourcen zu sparen. Die Detektion des Feinsynchronisationssignals wird hingegen mit einer höheren Verarbeitungsrate durchgeführt, so dass Signalverarbeitungsressourcen gezielt verteilt werden können. Hierzu ist die Signalverarbeitungseinrichtung ausgebildet, um die Detektion des Grobsynchronisationssignals in dem Empfangssignal mit einer ersten Abtastrate durchzuführen, und um eine Detektion des Feinsynchronisationssignals mit einer zweiten Abtastrate durchzuführen, wobei die zweite Abtastrate größer als die erste Abtastrate ist. Mit dem Begriff "Abtastrate", der sich auf den begriff "Verarbeitungsrate" bezieht wird im folgenden eine Anzahl Operationen pro Zeiteinheit, also die Taktrate, bezeichnet.

Da eine Abtastrate aufgrund des Abtasttheorems durch die Signalbandbreite vorgeben ist, kann die Suche nach dem Grobsynchronisationssignal, das bevorzugt schmalbandig ist, in einem niedrigen Abtasttakt (Verarbeitungstakt) durchgeführt werden. Demgegenüber wird die Suche nach dem Feinsynchronisationssignal in einem höheren Verarbeitungstakt, der mit einer höheren Abtastrate zusammenhängt, durchgeführt. Die während der ersten Synchronisationsphase (Grobsynchronisation) erzielte Aufwandsreduktion kann daher bei einem großen Verhältnis der Bandbreiten zueinander signifikant sein.

Erfindungsgemäß wird der Synchronisationsvorgang ferner beschleunigt, da in der Grobsynchronisationsphase bevorzugt nur eine ungefähre Bestimmung des Abschnitts, in dem das Feinsynchronisationssignal liegt, durchgeführt wird. Um den Abschnitt des Empfangssignals zu bestimmen, ist es daher ausreichend, wenn die Signalverarbeitungseinrichtung lediglich ein Auftreten des Grobsynchronisationssignals detektiert.

Die Signalverarbeitungseinrichtung ist ausgebildet, um eine Korrelation (beispielsweise eine Kreuzkorrelation) zwischen dem Empfangssignal und einem mit dem Grobsynchronisationssignal korrelierten Signal durchzuführen, um das Grobsynchronisationssignal in dem Empfangssignal zu detektieren. Diese Korrelation kann mit einer niedrigen Abtastrate laufend durchgeführt werden, so dass das Empfangssignal aufwandsreduziert durchsucht wird, um den Abschnitt des Empfangssignals, in dem das Feinsynchronisationssignal liegt, grob zu bestimmen.

Um die Position des Feinsynchronisationssignals in dem Abschnitt des Empfangssignals und somit um die Position des Synchronisationssignals in dem Empfangssignal zu bestimmen, ist die Signalverarbeitungseinrichtung bevorzugt ausgebildet, um eine Korrelation zwischen dem Abschnitt des Empfangssignals und einem mit dem Feinsynchronisationssignal korrelierten Signal durchzuführen. Diese Korrelation wird erfindungsgemäß mit einer höheren Abtastrate in einem hohen Verarbeitungstakt durchgeführt, um die Position des Synchronisationssignals genau zu erfassen.

Bei dem mit dem Grobsynchronisationssignal korrelierten Signal kann es sich beispielsweise um eine Kopie des Grobsynchronisationssignals handeln, die dem Empfänger bekannt ist. Analog kann es sich bei dem mit dem Feinsynchronisationssignal korrelierten Signal um eine dem Empfänger bekannte Kopie des Feinsynchronisationssignals handeln.

Wie es bereits erwähnt worden ist, umfasst das Synchronisationssignal das Grobsynchronisationssignal (im folgenden auch mit Akquisitions-Burst oder A-Burst bezeichnet) sowie das Feinsynchronisationssignal (auch mit Tracking-Burst oder T-Burst bezeichnet). Zum Beispiel ist das Synchronisationssignal (Präambel) zweiteilig, so dass erfindungsgemäß eine zweigeteilte Suche durchgeführt wird. Der eine Teil der Präambel besitzt eine relativ niedrige Bandbreite BA, mit der eine Online-Suche, das heißt eine Suche, bei der durchgängig über einen längeren Zeitraum gesucht wird bis das Feinsynchronisationssignal gefunden wurde, möglich wird. Dafür wird beispielsweise der entsprechende Teilfrequenzbereich der Bandbreite BA aus dem Empfangssignal der Breite B herausgefiltert und mit einer relativ niedrigen Abtastrate (Größenordnung BA) abgetastet. Die weitere Datenverarbeitung und Suche muss ebenso in dem Takt BA erfolgen. Durch diesen A-Burst ist die ungefähre Position der anderen Präambel (Feinsynchronisationssignal) ermittelbar. Aufgrund der geringen Bandbreite BA ist die Positionsgenauigkeit jedoch recht gering. Das Feinsynchronisationssignal besitzt beispielsweise hingegen die volle Bandbreite B. Rund um die erwartete, vom A-Burst prädizierte Position des T-Bursts in dem Empfangssignal wird ein Suchfenster aufgemacht (Abschnitt des Empfangssignals). Innerhalb dieses Fensters wird das Empfangssignal der vollen Bandbreite B abgetastet und im Takt B verarbeitet. Durch die Einschränkung auf ein Fenster wird die Verarbeitung trotz der hohen Bandbreite möglich, wobei nun die Position des T-Bursts hochgenau bestimmt werden kann. Dafür wird, wie es beispielsweise erwähnt worden ist, eine Korrelation berechnet. Beispielsweise kann so bei einer Bandbreite BA = 6 MHz und eine Bandbreite B = 77 MHz eine Aufwandsreduktion bezüglich der Verarbeitung im Takt B um Faktor 16 erzielt werden.

Weitere bevorzugte Ausführungsbeispiele der vorliegenden Erfindung werden nachfolgend bezugnehmend auf die beiliegenden Zeichnungen detailliert erläutert. Es zeigen:

Fig. 1     ein prinzipielles Blockdiagramm einer erfindungs- gemäßen Synchronisationsvorrichtung zum Bestimmen einer Position eines Synchronisationssignals in einem Empfangssignal;

Fig. 2     ein Blockdiagramm einer Synchronisationsvorrich- tung gemäß einem weiteren Ausführungsbeispiel;

Fig. 3     die zeitlichen Zusammenhänge

Fig. 4     beispielhaft vier Zeitsignale;

Fig. 5     eine Berechnungsvorschrift;

Fig. 6     ein Flußdiagramm der erfindungsgemäßen Signalver- arbeitung

Fig. 7     ein Beispiel für einen Pre-Trigger;

Fig. 8     eine Berechnungsvorschrift;

Fig. 9     einen Grundaufbau eines erfindungsgemäßen Empfän- gers für die Akquisition;

Fig. 10    eine Zuordnungsvorschrift;

Fig. 11    ein Konstellations-Diagramm;

Fig. 12    eine Übertragungsfunktion eines Filters;

Fig. 13a   eine Verteilung des komplexen Signals auf 9 un- terschiedliche Frequenzbänder;

Fig. 13b   eine Frequenztabelle;

Fig. 14    einen A-Burst;

Fig. 15    Abstände im Burst-Multiplex;

Fig. 16    ein Blockdiagramm eines systematischen Encoders für CRC-12-Code;

Fig. 17    ein Blockdiagramm eines terminierten rekursiven systematischen Faltungskodierers; und

Fig. 18    eine Erzeugung des T-Bursts.

Die Synchronisationsvorrichtung umfasst eine erste Detektionseinrichtung 101 mit einem Eingang und einem Ausgang, der mit einer zweiten Detektionseinrichtung 103 gekoppelt ist. Die zweite Detektionseinrichtung umfasst einen Eingang, der mit dem Eingang der ersten Detektionseinrichtung gekoppelt ist sowie einen Ausgang.

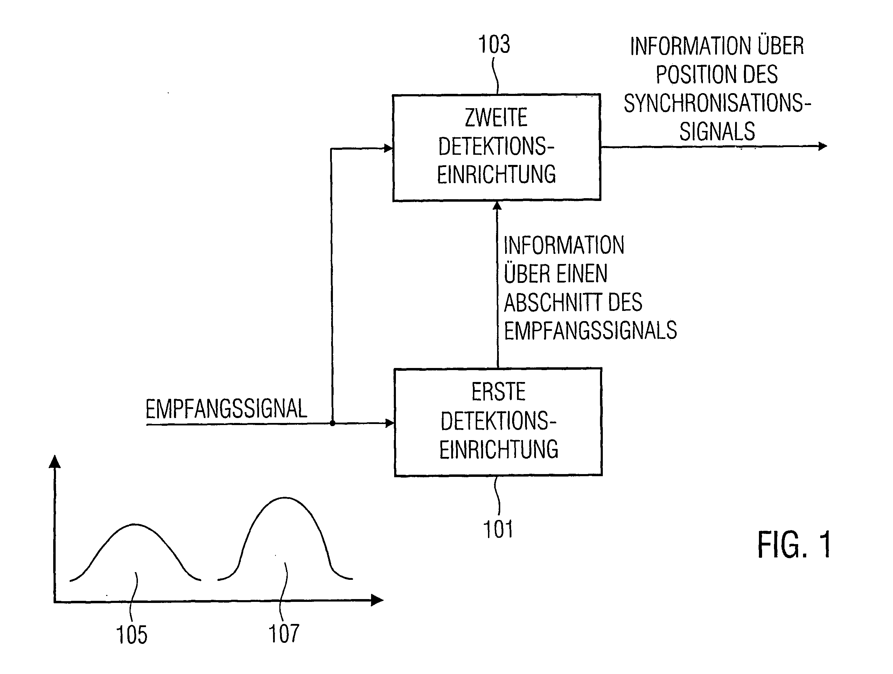

Erfindungsgemäß ist an den Eingang der ersten Detektionseinrichtung 101 ein Empfangssignal anlegbar, wobei das Empfangssignal, wie es in Fig. 1 dargestellt ist, ein Synchronisationssignal, bestehend aus einem Grobsynchronisationssignal 105 und einem Feinsynchronisationssignal 107 umfassen kann.

Die erste Detektionseinrichtung 101 ist ausgebildet, um das Grobsynchronisationssignal in dem Empfangssignal zu detektieren, um den Abschnitt des Empfangssignals zu erfassen, in dem das Feinsynchronisationssignal liegt. Nach der Detektion des Grobsynchronisationssignals liefert die erste Detektionseinrichtung 101 über den Ausgang eine Information über einen Abschnitt des Empfangssignals, in dem das Feinsynchronisationssignal liegt, an die zweite Detektionseinrichtung 103. Die zweite Detektionseinrichtung 103 ist ausgebildet, um eine Position des Feinsynchronisationssignals in dem Abschnitt des Empfangssignals zu erfassen und um eine Information über die Position des Synchronisationssignals, die durch die Position des Feinsynchronisationssignals in dem Abschnitt des Empfangssignals festgelegt ist, auszugeben. Dabei ist die erste Detektionseinrichtung ausgebildet, um das Grobsynchronisationssignal mit einer ersten Abtastrate, das heißt, in einem ersten Takt, zu detektieren. Die zweite Detektionseinrichtung 103 ist demgegenüber ausgebildet, um die Position des Feinsynchronisationssignals mit einer zweiten Abtastrate, das heißt, in einem zweiten Takt, zu erfassen. Dabei ist die erste Abtastrate geringer als die zweite Abtastrate (bzw. der erste Takt ist geringer als der zweite Takt).

Erfindungsgemäß weist das Grobsynchronisationssignal eine Bandbreite auf, die geringer als eine Bandbreite des Feinsynchronisationssignals ist. Um das Grobsynchronisationssignal zu detektieren umfasst die erste Detektionseinrichtung 101 beispielsweise ein Filter zum Filtern des Empfangssignals, um das Grobsynchronisationssignal aus dem Empfangssignal herauszufiltern. Handelt es sich bei dem Grobsynchronisationssignal um ein Bandpasssignal mit einer Mittelfrequenz, so belegt das Grobsynchronisationssignal einen vorbestimmten Frequenzbereich, der durch die Mittelfrequenz sowie durch die Bandbreite des Grobsynchronisationssignals festgelegt ist. Durch das Filter wird somit eine Empfangssignalkomponente herausgefiltert, die den vorbestimmten Frequenzbereich belegt, herausgefiltert, wobei das Filter ein Bandpassfilter sein kann. Falls das Grobsynchronisationssignal gesendet wurde, so ist dessen empfangene Version nach der Filterung in der Empfangssignalkomponente enthalten.

Handelt es sich bei dem Grobsynchronisationssignal um ein Bandpasssignal, so umfasst die erste Detektionseinrichtung beispielsweise einen Abwärtsmischer zum Abwärtsmischen der Empfangssignalkomponente, die ebenfalls ein Bandpasssignal ist, um beispielsweise eine Empfangssignalkomponente im Basisband zu erhalten, die für eine Detektion des Grobsynchronisationssignals im Basisband bereitgestellt werden kann.

Bei dem Grobsynchronisationssignal kann es sich jedoch bereits um ein Basisbandsignal handeln, so dass der vorbestimmte Frequenzbereich im Basisband ist. In diesem Falle ist das Filter ein Tiefpassfilter, um eine Empfangssignalkomponente im Basisband herauszufiltern.

Handelt es sich bei dem Empfangssignal um ein analoges Signal, so kann die erste Detektionseinrichtung 101 ferner eine Abtasteinrichtung umfassen, um eine Analog-DigitalWandlung der Empfangssignalkomponente mit der ersten Abtastrate durchzuführen.

Gemäß einem weiteren Aspekt umfasst die erfindungsgemäße Signalverarbeitungseinrichtung beispielsweise eine steuerbare Abtasteinrichtung, die ausgebildet ist, um das Empfangssignal mit der ersten Abtastrate abzutasten, wenn die erste Detektionseinrichtung 101 das Grobsynchronisationssignal nicht detektiert hat, und um das Empfangssignal mit der zweiten Abtastrate abzutasten, sobald die erste Detektionseinrichtung 101 das Grobsynchronisationssignal detektiert hat. Hierzu kann die Synchronisationsvorrichtung ferner eine Steuerungseinrichtung umfassen, die ansprechend auf ein Detektionssignal, das die Detektion des Grobsynchronisationssignals anzeigt und das von der ersten Detektionseinrichtung 101 ausgebbar ist, die Abtasteinrichtung ansteuert, um eine höhere Abtastrate, zum Beispiel um die zweite Abtastrate, einzustellen.

Gemäß einem weiteren Aspekt der vorliegenden Erfindung kann es sich bei dem Empfangssignal bereits um ein mit der zweiten Abtastrate abgetastetes digitales Signal handeln. Um die Detektion des Grob-Synchroisationssignals mit der ersten Abtastrate durchzuführen, kann die erste Detektionseinrichtung 101 ferner einen Abrastratenumsetzer aufweisen, wobei der Abtastratenumsetzer ausgebildet ist, um das Empfangssignal unterabzutasten, um ein Empfangssignal mit der ersten Abtastrate zu erhalten.

Für eine Detektion des Grobsynchronisationssignals in dem Empfangssignal, beziehungsweise in der Empfangssignalkomponente, die ein Teil des Empfangssignals ist, durchzuführen, umfasst die erste Detektionseinrichtung 101 gemäß einem weiteren Aspekt der vorliegenden Erfindung einen Detektor, der ausgebildet ist, um eine Korrelation zwischen der Empfangssignalkomponente und einem mit dem Grobsynchronisationssignal hinreichend stark korrelierten Signal durchzuführen. Bei dem mit dem Grobsynchronisationssignal korrelierten Signal kann es sich beispielsweise um eine Kopie des Grobsynchronisationssignals im Basisband oder im Bandpass handeln.

Um die Detektion des Grobsynchronisationssignals anzuzeigen, ist der von der ersten Detektionseinrichtung 101 umfasste Detektor beispielsweise ausgebildet, um ein Detektionssignal auszugeben, das beispielsweise einer Information über den Abschnitt des Empfangssignals, in dem das Feinsynchronisationssignal liegt, umfasst. Der Detektor kann beispielsweise ausgebildet sein, um das Detektionssignal auszugeben, wenn ein Wert der Korrelation eine Detektionsschwelle überschreitet. Bei dem Wert der Korrelation kann es sich beispielsweise um einen Kreuzkorrelationskoeffizienten an der Stelle Null handeln. Ferner kann der Wert der Korrelation auf einen Maximalwert der Korrelation normiert sein, so dass die Detektionsschwelle eine relative Größe sein kann, die beispielsweise bei einem relativen (d.h. normierten) Korrelationswert von 10 % liegt. In anderen Worten, es kann eine Leistungsnormierung derart vorgenommen werden, dass in einem Idealfall, in dem das empfangene Signal gegenüber dem Sendesignal nicht verzerrt ist (empfangenes Signal = Faktor * Sendesignal), ein Maximalwert des normierten Korrelationswertes erreicht wird. In einem nicht-idealen Fall, also bei Vorliegen einer Verzerrung des Empfangssignals, liegt der normierte Korrelationswert unter dem Maximalwert.

Das von der ersten Detektionseinrichtung 101 gelieferte Detektionssignal kann beispielsweise einen Detektionszeitpunkt anzeigen, zu dem das Grobsynchronisationssignal detektiert worden ist, wobei der Detektionszeitpunkt einen Beginn des Abschnitts des Empfangssignals anzeigt, in dem das Feinsynchronisationssignal liegt. Die zweite Detektionseinrichtung 103 ist ausgebildet, um das Detektionssignal zu empfangen, und um ansprechend auf das Detektionssignal einer Position des Feinsynchronisationssignals in dem Abschnitt des Empfangssignals, der durch den Detektionszeitpunkt festgelegt ist, zu erfassen.

Gemäß einem weiteren Aspekt der vorliegenden Erfindung ist die erste Detektionseinrichtung 101 ausgebildet, um die zweite Detektionseinrichtung 103 zu aktivieren, so dass diese erst nach dem Detektionszeitpunkt mit einer Erfassung der Position des Feinsynchronisationssignals und somit mit einer Erfassung der Position des Synchronisationssignals in dem Empfangssignal beginnt.

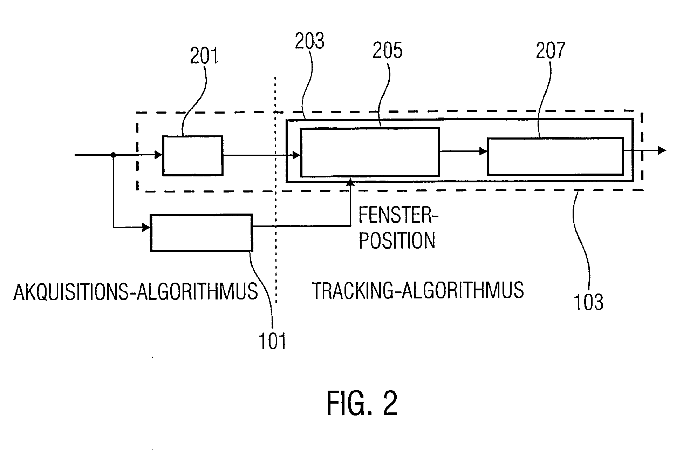

Fig. 2 zeigt ein Blockdiagramm einer Synchronisationsvorrichtung gemäß einem weiteren Ausführungsbeispiel.

Die Synchronisationsvorrichtung umfasst die erste Detektionseinrichtung 101 sowie die zweite Detektionseinrichtung 103. Die Funktionalitäten der Synchronisationsvorrichtung sind in Fig. 2 aus Veranschaulichungsgründen mit einem vertikalen Strich separiert, um den erfindungsgemäßen zweistufigen Ansatz zu verdeutlichen. Die links von dem vertikalen Strich eingezeichneten Funktionalitäten sind im Wesentlichen für die Akquisition zuständig (Akquisitions-Algorithmus), das heißt für die Detektion des Grobsynchronisationssignals in dem Empfangssignal. Die rechts von dem vertikalen Strich eingezeichneten Funktionalitäten sind hingegen für die genaue Bestimmung der Position des Feinsynchronisationssignals und somit der Position des Synchronisationssignals in dem Abschnitt des Empfangssignals zuständig (Tracking-Algorythmus).

Die in Fig. 2 dargestellte zweite Detektionseinrichtung 103 umfasst eine Verzögerungseinrichtung 201 zum Verzögern des Empfangssignals, wobei die Verzögerungseinrichtung ausgebildet ist, um eine Detektionsverzögerung der ersten Detektionseinrichtung 101 zu kompensieren. Die Verzögerungseinrichtung 201 kann beispielsweise ein First-In-First-Out(FIFO)-Speicher sein mit einer Speichertiefe, die die gewünschte Verzögerung realisiert.

Die Verzögerungseinrichtung 201 weist einen Ausgang auf, der mit einem Detektor 203, der von der zweiten Detektionseinrichtung 103 umfasst ist, gekoppelt ist. Der Detektor 203 ist ausgebildet, um eine Position des Feinsynchronisationssignals in dem Abschnitt des Empfangssignals zu detektieren. Beispielsweise ist der Detektor 203 ausgebildet, um eine Korrelation zwischen den Abschnitt des Empfangssignals und einem mit dem Feinsynchronisationssignal korrelierten Signal zu bestimmen, um die Position des Feinsynchronisationssignals zu erfassen.

Bei dem mit dem Feinsynchronisationssignal korrelierten Signal kann es sich beispielsweise um eine Kopie des Feinsynchronisationssignals handeln, wobei die Kopie beispielsweise ein Basisbandsignal oder ein Bandpasssignal sein kann.

Die zweite Detektionseinrichtung 103 weist in dem in Fig. 2 dargestellten Ausführungsbeispiel ferner einen ersten Korrelator 205 auf. Der erste Korrelator 205 umfasst einen Eingang, der mit dem Ausgang der Verzögerungseinrichtung 201 gekoppelt ist, einen weiteren Eingang, der mit einem Ausgang der ersten Detektionseinrichtung 101 gekoppelt ist, und einen zweiten Ausgang, der mit einem Eingang eines zweiten Korrelators 207 bzw. mit einer Interpolationseinrichtung 207 gekoppelt ist.

Der ersten Korrelator 205 und der zweite Korrelator 207 können beispielsweise von dem im Zusammenhang mit dem in Fig. 1 dargestellten Ausführungsbeispiel beschriebenen Detektor umfasst sein.

Das Empfangssignal, das an dem Eingang der ersten Detektionseinrichtung 101 und dem Eingang der zweiten Detektionseinrichtung 103 anliegt, ist beispielsweise ein von der Antenneneinheit geliefertes Basisbandsignal, welches in (komplexe) Basisband heruntergemischt wurde und somit in I- und Q-Komponenten vorliegt. Das Empfangssignal wurde beispielsweise in einem Abtasttakt B_cloc abgetastet und liegt somit in digitaler Form an.

Die erste Detektionseinrichtung 101 ist ausgebildet, um die Akquisition durchzuführen, das heißt, um eine fortwährende Suche der A-Bursts (Grobsynchronisationssignale) zum Aufsynchronisieren auf einen Sender durchzuführen. Umfasst das Empfangssignal beispielsweise Synchronisationssignale, die von einer Mehrzahl von Sendern, wobei jedes Synchronisationssignal ein Grobsynchronisationssignal umfasst, das einen anderen Frequenzband belegt, so kann das von der ersten Detektionseinrichtung 101 umfasste Filter durchstimmbar sein, um die Empfangssignalkomponente herauszufiltern, die den Frequenzbereich belegt, in dem das zu detektierende Grobsynchronisationssignal liegt.

Der erste Korrelator 205 ist ausgebildet, um eine Information über den Abschnitt des Empfangssignals (Fensterposition) über den weiteren Eingang zu empfangen, so dass der rechenintensivere Teil des Tracking-Algorithmus, das heißt Bestimmung der Position des Feinsynchronisationssignals, nur in den Abschnitten des Empfangssignals (Fenstern) durchgeführt wird. Dabei ist der erste Korrelator 205 ausgebildet, um eine Suche nach dem T-Burst im Raster B_samples durchzuführen. Hierzu ist der erste Korrelator 205 ausgebildet, um eine Korrelation zwischen dem Abschnitt des Empfangssignals mit einem mit dem Feinsynchronisationssignal korrelierten Signal zu bestimmen, um das Feinsynchronisationssignal (T-Burst) zu finden. Der zweite Korrelator 207 ist ausgebildet, um eine Feinkorrelation im Überabtasttakt durchzuführen. Der zweite Korrelator 207 arbeitet mit den Korrelationswerten, die von dem ersten Korrelator 205 bestimmt worden sind, und sucht den T-Burst in einem sehr feinen Raster.

Der z.B. von der ersten Detektionseinrichtung 107 ausgeführte Akquisitionsalgorithmus nutzt das Grobsynchronisationssignal (A-Burst) im Empfangssignal, um die ungefähre Position eines T-Bursts im Empfangssignal vorherzusagen.

Vor dem Eingang des Tracking-Algorithmus wird das Empfangssignal mit dem FIFO 201 gezielt verzögert. Aufgrund der Positionsvorhersage des Akquisitions-Algorithmus schneidet der Tracking-Algorithmus ein Fenster aus dem Empfangssignal heraus, innerhalb dessen der T-Burst gesucht wird.

Erfindungsgemäß erfolgt die Suche in zwei Schritten. Im ersten Schritt werden die Korrelationswerte für den T-Burst im Raster B_Sample im vorhergesagten Fenster bestimmt. Die Korrelation wird durch den ersten Korrelator 205 durchgeführt.

Gemäß einem weiteren Aspekt der vorliegenden Erfindung ist der zweite Korrelator 205 ausgebildet, um die Korrelation auf der Basis von Teilkorrelationen zu bestimmen, um den Einfluss von Frequenzversatz auf die Korrelationswerte deutlich zu verringern. Bei dem Frequenzversatz handelt es sich um einen Frequenzunterschied zwischen Sender und Empfänger. Hierzu ist der erste Korrelator 205, der beispielsweise von dem oben beschriebenen Detektor umfasst ist, ausgebildet, um eine erste Teilkorrelation zwischen einer ersten Teilmenge von Empfangssignalwerten in dem Abschnitt des Empfangssignals und einer ersten Teilmenge von Werten des mit dem Feinsynchronisationssignal korrelierten Signals zu bestimmen, und um eine zweite Teilkorrelation zwischen einer zweiten Teilmenge von Empfangssignalwerten in dem Abschnitt des Empfangssignals und einer zweiten Teilmenge von Werten des mit dem Feinsynchronisationssignal korrelierten Signals zu bestimmen. Dabei unterscheiden sich die jeweiligen ersten Teilmengen und zweiten Teilmengen um mindestens einen Wert. Bevorzugt handelt es sich bei den ersten Teilmengen und zweiten Teilmengen um verschiedene Abschnitte von den jeweiligen Signalen. Die Korrelation wird durch eine Überlagerung der ersten Teilkorrelation und der zweiten Teilkorrelation bestimmt. Um den Phasenversatz zu eliminieren kann der Detektor beziehungsweise der erste Korrelator 205 ausgebildet sein, um ein Phasenbeziehung zwischen korrespondierenden Werten der ersten Teilkorrelation und der zweiten Teilkorrelation zu erfassen, wobei die Phasenbeziehung einen Frequenzversatz zwischen Sender und Empfänger umfasst. Bei den korrespondierenden Werten der ersten Teilkorrelation und der zweiten Teilkorrelation handelt es sich um Teilkorrelationswerte, die an der selben Stelle der jeweiligen Teilkorrelation auftreten. Ausgehend von der bestimmten Phasenbeziehung ist der Detektor beziehungsweise der erste Korrelator 205 ausgebildet, um die Phasenbeziehung durch eine Gewichtung der ersten Teilkorrelation oder durch eine Gewichtung der zweiten Teilkorrelation zu eliminieren, um einen Einfluss des Frequenzversatzes auf die Werte der Korrelation zu reduzieren. Dabei werden die jeweiligen Korrelationswerte beispielsweise mit einer inversen Phasenbeziehung bewertet.

Gemäß einem weiteren Aspekt der vorliegenden Erfindung umfasst der von der zweiten Detektionseinrichtung 103 umfasste Detektor einen Interpolator zum Interpolieren zwischen den Werten der Korrelation, um eine Feinkorrelation zu erhalten, und um die Position des Feinsynchronisationssignals auf der Basis der Feinkorrelation mit einer höheren Genauigkeit zu erfassen. In dem in Fig. 2 dargestellten Ausführungsbeispiel wird diese Interpolation beispielsweise von den zweiten Korrelator 207 durchgeführt, der ausgebildet sein kann, um eine Überabtastung, bei der Nullen zwischen die Werte der Korrelation eingefügt werden, um eine Interpolation, durchzuführen. Zum Zwecke der Interpolation kann der Interpolator von dem zweiten Korrelator 207 umfasst sein und beispielsweise als ein Interpolationsfilter ausgeführt sein.

Gemäß einem weiteren Aspekt der vorliegenden Erfindung kann das Feinsynchronisationssignal ferner eine Information umfassen, die neben der Synchronisationsinformation mitausgesendet wird. Diese Information kann beispielsweise durch eine Phasenrelation zwischen aufeinanderfolgenden Werten des Feinsynchronisationssignals kodiert sein. Bei der Phasenrelation kann es sich beispielsweise um einen Phasensprung um 180.° handeln, der an einer vorbestimmten Position in dem Feinsynchronisationssignal stattfinden kann, so dass beispielsweise eine zweite Hälfte des Feinsynchronisationssignals zusätzlich um 180° gedreht worden ist, beispielsweise durch eine Multiplikation mit -1. Die zweite Detektionseinrichtung 103 ist dann ausgebildet, um die Information durch Erfassen der Phasenbeziehung zu detektieren. Dabei wird bevorzugt der Phasensprung detektiert, so dass die Information aus der Phasendekodierung wiedergewonnen werden kann.

Gemäß einem weiteren Aspekt ist die zweite Detektionseinrichtung 103 ausgebildet, um aus der Korrelation Qualitätswerte für eine Empfangsqualität abzuleiten. Dabei kann beispielsweise mit Hilfe der Korrelation eine Kanaldämpfung abgeleitet werden, die einen Einfluss auf die Qualität des Empfangssignals hat. Darüber hinaus kann mit Hilfe der Korrelation ferner beispielsweise eine Leistung von additiven Störsignalen, beispielsweise Rauschen, erfasst werden, die ebenfalls einen Einfluss auf die Qualität des Empfangssignals hat.

Die Korrelationswerte, die geschätzte Phasenrelation, die einem geschätzten Kanalbit entspricht, sowie die Qualitätswerte werden von dem zweiten Korrelator 205 bestimmt. Darüber hinaus kann der erste Korrelator 205 ausgebildet sein, um Signalisierungsinformation (Signalisierungs-Flags) auszugeben. Diese Informationen können beispielsweise an ein Software-Modul übergeben werden, welches die Korrelationswerte in einem sehr viel feineren Raster als B_Sample interpoliert (Feinkorrelation) und damit eine hochgenaue Schätzung einer Ankunftszeit des Synchronisationssignals finden kann. Die genannte Interpolation kann aber auch in dem zweiten Korrelator 207 (bzw. in der Interpolationseinrichtung 207) bestimmt werden. Außerdem können aus den Korrelationswerten weitere Qualitätswerte bestimmt werden. Gemäß einem weiteren Ausführungsbeispiel ist die zweite Detektionseinrichtung ausgebildet, um ein Positionssignal auszugeben, das eine Position des Feinsynchronisationssignals in dem Abschnitt des Empfangssignals anzeigt, um die Position des Synchronisationssignals in dem Empfangssignal anzuzeigen.

Gemäß einem weiteren Aspekt liefert die vorliegende Erfindung eine Empfängereinheit, die beispielsweise ein Korrelationsboard, eine Prozessoreinheit und eine optische Internetschnittstelle aufweist, eine Prozessoreinheit und eine optische Internetschnittstelle. Darüber' hinaus kann die Empfängereinheit einen Takt- und Triggergenerator umfassen, der alle notwendigen Taktsignale für eine Antenneneinheit und die Empfängereinheit zur Verfügung stellt. Die Verteilung der Signale kann dabei beispielsweise über Lichtwelllenleiter oder Koaxialkabel erfolgen.

Zur besseren Integration kann das Korrelationsboard, auf dem die für eine Korrelationsberechnung notwendigen Funktionalitäten zusammengefasst sind, beispielsweise als reine PCIx-Einsteckkarte ausgeführt sein. Somit können alle vorhandenen Be- und Entlüftungsmechanismen der Prozessoreinheit genutzt werden. Durch Verwendung handelsüblicher optischer Interneteinsteckkarten (10/100 Mbps) erfolgt eine Anwendung eines Steuerlinks ebenfalls direkt an die Prozessoreinheit.

Im Korrelationsboard können beispielsweise alle Algorithmen zur Sendezeitpunktbestimmung (Synchronisation) als Softwaremodule angeordnet und auf einer kommerziell verfügbaren Rechenplattform basiert portiert werden. Bevorzugt werden große Teile der Algorithmen als Hardwaremodule auf eine FPGA-Plattform implementiert (FPGA = Field Programmable Gate Array).

Die Empfängereinheit kann ferner ausgebildet sein, um Signale von einer Mehrzahl von Sendern, beispielsweise 150 Sender, zu verarbeiten. Sollen beispielsweise Signale von einem bestimmten Sender empfangen werden, so wird erfindungsgemäß auf diesem bestimmten Sender unter Verwendung des oben stehend beschriebenen erfindungsgemäßen Konzeptes zu synchronisieren.

Wie es bereits erwähnt worden ist, werden Teile der Algorithmen zur Sendezeitbestimmung (Synchronisation) in Hardware umgesetzt. Die notwendigen weiteren Schritte werden beispielsweise von einem Prozessor übernommen. Bei diesem Prozessor kann es sich beispielsweise um einen PPC-Prozessor handeln. Es muss es sich aber nicht zwingender Weise um einen PPC handeln, es ist ebenso möglich eine herkömmliche Prozessorvariante zu verwenden.

Das Hardware-Modul liegt in der Implementierung für jeden Sender, der mit der erfindungsgemäßen Empfangseinheit kommuniziert, einmal vor. Dagegen kann die Software so ausgeführt werden, dass sie nur einmal vorkommt und alle Sender auswertet. Dabei kann eine Schnittstelle zwischen dem Hardware- und dem Software-Modul aus Gründen einer günstigeren Implementierung gegebenenfalls auch verschoben werden. So werden zum Beispiel nicht alle Teilrelationswerte im FPGA kohärent aufaddiert (mit Rotationsterm, Phasenrelation und so weiter) sondern erst in der Software.

Im Folgenden wird die erfindungsgemäße Triggerung und Empfangssignal-Fensterung (Abschnitt des Empfangssignals) beschrieben.

Der Akquisitions-Algorithmus übergibt dem Tracking-Algorithmus ein Pre-Trigger-Signal a_pre-trigger, welches genau durch a_predist B_samples ausgelöst wird, bevor der Tracking-Algorithmus das nächste Empfangssignal-Fenster aufmachen soll. Dieser Pre-Trigger wird nach dem Fund eines A-Bursts aktiviert.

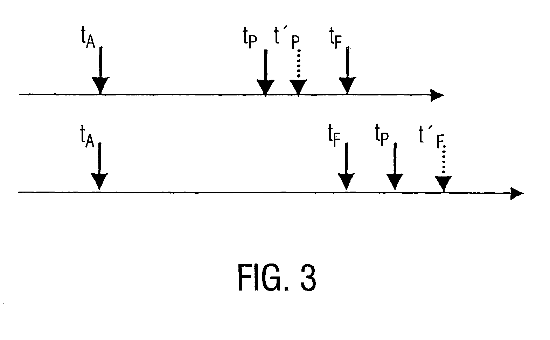

Beim Auslösen des Fensterstarts können je nach Implementierung und Konfiguration des Senders zwei Situationen vorkommen. Fig. 3 verdeutlicht die zeitlichen Zusammenhänge.

Im oberen Diagramm von Fig. 3 beschreibt $t_A$ den Start-Zeitpunkt des A-Bursts im Empfangssignal, $t_F$ ist der korrekte Start-Zeitpunkt des Fensters zu den T-Burst, und $t_P$ ist der Zeitpunkt, wann der Akquisitions-Algorithmus den A-Burst erkannt hat und den Pre-Trigger auslösen könnte. Der Zeitraum $t = t_P - t_A$ wird vom Abstand des A- zum nachfolgenden T-Burst bestimmt, wobei das Fenster bereits B_samples vor der Korrelationssequenz des T-Burst startet, und wird somit durch die Konfiguration des Senders festgelegt.

Am Eingang des Tracking-Algorithmus wird stets davon ausgegangen, dass der Pre-Trigger genau B_samples vor dem gewünschten Fenster-Start kommt. Je nach Implementierung und Sender-Konfiguration kann entweder die Situation im oberen Diagramm oder im unteren Diagramm von Fig. 3 erhalten werden, wann der Akquisitionsalgorithmus den A-Burst auffindet, und wann das Fenster für den T-Burst gestartet werden muss.

Wenn der Abstand $t_F - t_P$ größer als a_predist [in B_samples] ist, dann würde der A-Algorithmus den Pre-Trigger zu früh auslösen. In diesem Fall muss der A-Algorithmus den Pre-Trigger bis zu einem Zeitpunkt $t_P$' verzögern, so dass $t_F - t_P$' = a_predest, und den verzögerten Trigger an den T-Algorithmus weitergeben. Der FIFO-Puffer vor dem Eingang des Tracking-Algorithmus darf in diesem Fall das Eingangssignal gar nicht verzögern.

Wenn der Abstand $t_F - t_P$ < a_predist ist, dann würde der Akquisitions-Algorithmus den Pre-Trigger zu spät auslösen. In diesem Fall muss der FIFA-Puffer das Eingangssignal um a_predest-($t_F - t_P$) die P-samples verzögern, so dass dahinter der korrekte Fensterstart zum Zeitpunkt $t_F$ erfolgt mit $t$'$_F - t_P$ = a_predist. Dabei löst der Akquisitions-Algorithmus den Pre-Trigger unverzögert aus, sobald er einen A-Burst findet, also zum Zeitpunkt $t_P$.

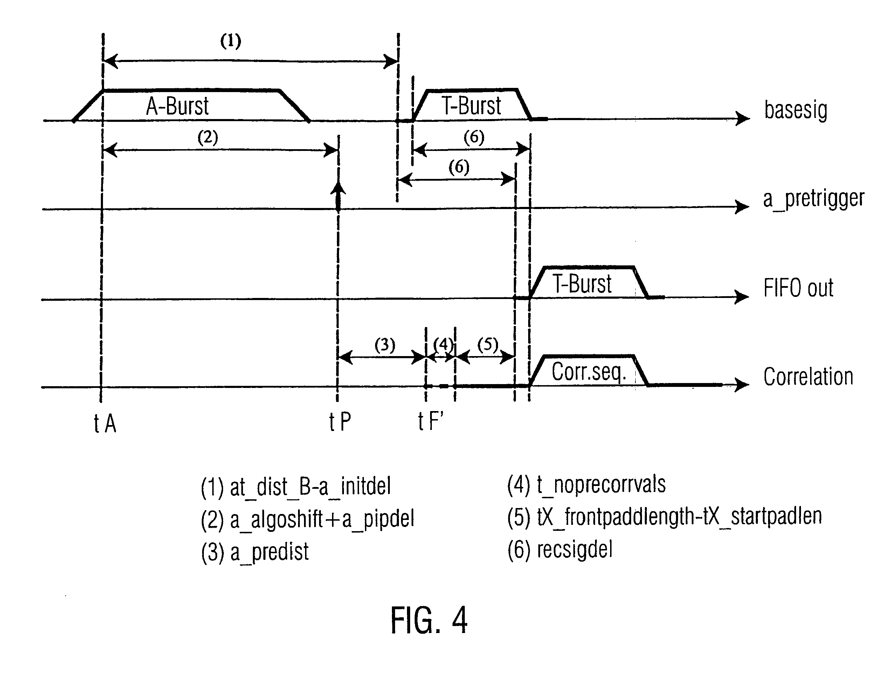

In Fig. 4 sind beispielhaft vier Zeitsignale dargestellt: Das (unverzögerte) Empfangssignal basesig, das Pre-Trigger-Signal a_pre-trigger, das Ausgangssignal des FIFOs sowie die Position der Korrelationssequenz, mit der der T-Burst im Empfänger korreliert wird (während der Teilkorrelationsberechnung).

Im obigen Bild wird davon ausgegangen, dass recsigdel (vgl.

Fig. 4) positiv ist, dass der untere Fall aus Fig. 3 vorliegt. Wie oben beschrieben sind hier wieder der Start des A-Bursts $t_A$ (gemessen in seinem ersten gültigen B_sample, das heißt ohne Einschwingvorgänge der Filter) der Zeitpunkt $t_P$ des Pre-Triggers und der gewünschte Fenster-Start $t'_F$ im (durch den FIFO) verzögerten Empfangssignal eingezeichnet.

Es sollte beachtet werden, dass der T-Burst implementierungsbedingt mit ein paar gepaddeten Nullen beginnt. Der T-Burst-Start ist jedoch bereits das erste B_sample, das heisst, die erste gepaddete Null.

Der Abstand (1) der beiden Burst-Starts (beim A-Burst gemessen ab dem ersten gültigen B-sample ohne Filtereinschwingungen, beim T-Burst hingegen gemessen ab der ersten vorne gepaddeten Null) ist a_dist_B - a_initdel (in B_samples) und ist somit allein von der Senderkonfiguration bestimmt. Hierbei ist at_dist_B der Wert von at_dist (in S_cycles) umgerechnet auf B_cycles und kann somit nichtganzzahlig werden.

Hingegen ist der Abstand (2) von $t_P$ - $t_A$ ein reines Processing Delay des A-Alogorithmus, also implementierungsabhängig. Sein Wert beträgt a_algoshift + a_pipdel.

Mit (3) wird der Abstand $t'_F$ - $t_P$ = a_predist (in B-samples) gekennzeichnet.

In $t'_F$ beginnt die Fensterung des Empfangssignals, und die Korrelationssequenz wird "ganz links" an das Empfangssignal angelegt. Dabei erfolgt die Fensterung so, dass eine optimale Überdeckung zwischen empfangenem T-Burst und Korrelationssequenz in der Mitte der berechneten t-nocorrvals Korrelationswerte zu erwarten ist. Der "Vorlauf" beträgt also t_nocorrvals/2 Korrelationswerte, was einem Vorlauf (4) t_noprecorrvals = t_nocorrvals/2 B_samples im Empfangssignalfenster entspricht.

Schließlich muss noch berücksichtigt werden, dass der T-Burst im Sender und die dazugehörige Korrelationssequenz im Empfänger unterschiedlich lang mit Nullen gepaddet werden. Für den T-Burst X = 0/1 des betrachteten Senders besitzt die Länge des Zero-Paddings am Start den Wert tX_startpadlen, für die zugehörige Korrelationssequenz im Empfänger ist die Zero-Padding-Länge tX-frontpaddlength. Dementsprechend beginnt die Korrelationssequenz bereits tX_frontpaddlength - tX_startpadlen B-samples vor dem verzögerten T-Burst, wobei dieser Wert für einen Sender für X = 0 und 1 stets gleich ist. Auch bei der FIFO-Verzögerung muss diese Längendifferenz (5) des Zero-Paddings berücksichtigt werden. Durch das längere Zero-Padding in der Korrelationssequenz muss auch das Empfangssignal-Fenster deutlich länger werden als T-Burst.

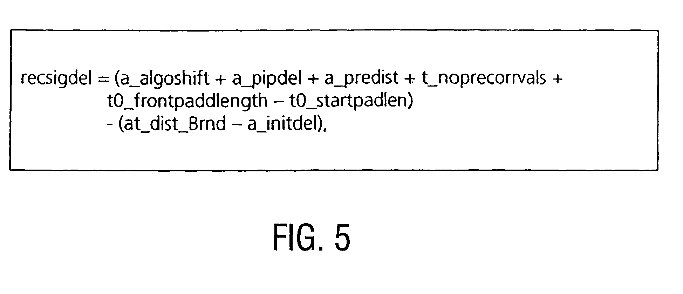

Weiterhin ist in Fig. 4 die Verzögerung (6) im FIFO zu sehen. Diese Verzögerung recsigdel (in B-samples) kann, wie es in Fig. 5 dargestellt ist, berechnet werden, wobei at_dist_Brnd der gerundete Wert von at_dist_B ist.

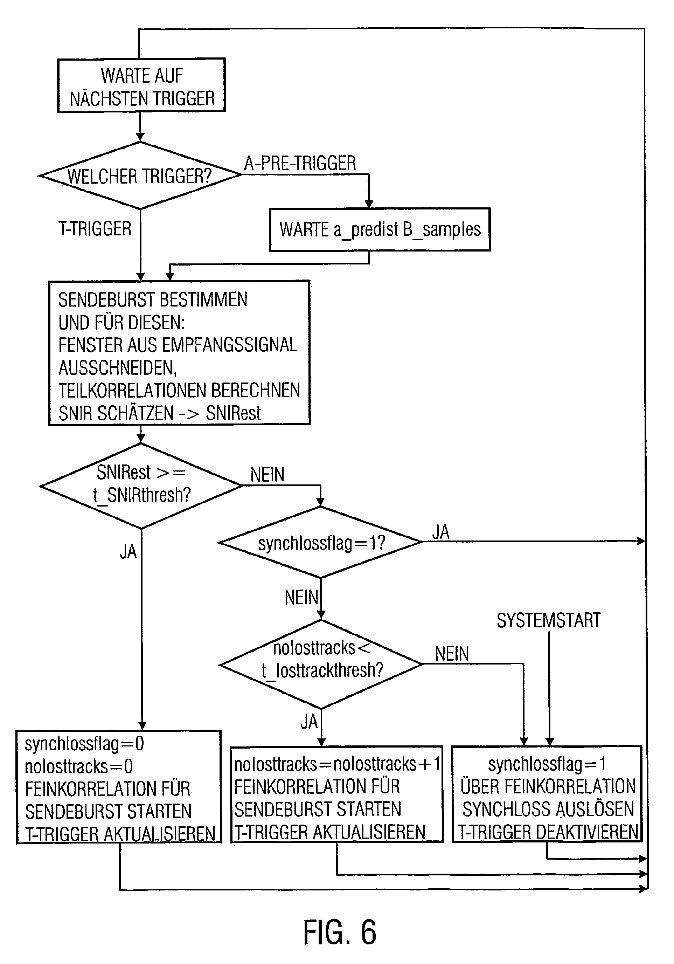

Fig. 6 zeigt ein Flußdiagramm der erfindungsgemäßen Signalverarbeitung:

- der Fensterstart des Empfangssignals kann entweder vom T-Algo selbst oder aber vom A-Algo getriggert werden
- der A-Algo benutzt zum Starten des Fensters keinen Trigger sondern einen Pre-Trigger, der eine festgelegte Anzahl a_predist B_samples vor dem Fensterstart aktiviert wird. Dadurch erreicht man, dass auch bei max. Frequenzversatz maxfreqoffsppm und maximal langer Prädiktion im T-Algo (d.h. über t_losttrackthresh+1 T-Burst-Perioden zu je t_burstperiod_B B-samples) der Pre-Trigger des A-Algos stets vor dem Trigger des T-Algos kommt, d.h.

$$\text{a\_predist} \geq (\text{t\_losttrackthresh} + 1) * \text{t\_burstperiod\_B} * \text{maxfreqoffsppm} * 10^{-6}.$$

In dem Beispiel im folgenden Abschnitt wird die Motivation des Pre-Triggers und seine Funktion näher erläutert.

- das Verlassen des Wartezustands wird vom ersten Trigger ausgelöst, d.h. entweder dem T-Trigger oder dem A-Pre-Trigger

- wenn der A-Pre-Trigger den Wartezustand beendet hat, dann müssen vor dem Start der Empfangssignal-Fensterung a_predist B_samples abgewartet werden; im Falle des T-Triggers kann der Fensterstart sofort erfolgen

- im Hauptteil der Ablaufsteuerung wird zuerst bestimmt, welcher der zwei im Minisender einprogrammierten T-Bursts gesendet worden ist (Nr. 0 oder Nr. 1); die Korrelation und alle weiteren Berechnungen sind für die Parameter dieses T-Bursts durchzuführen. Zur Bestimmung des ausgestrahlten T-Bursts wird ein Flag t_choice verwendet, das innerhalb der Ablaufsteuerung berechnet werden kann, wie es in [RD6] beschrieben ist.

- Für die korrekte Bestimmung des T-Burst (unter den zwei Möglichkeiten), den der Sender abgestrahlt hat, muss innerhalb der Ablaufsteuerung ein Zähler a_multipl_cntr mitgeführt werden, wie er in [RD6]; beschrieben ist; im Unterschied zum Minisender reicht es im Empfänger jedoch, wenn a_multipl_cntr vor dem 1. T-Burst einer Akquisitions-Periode (und nicht bereits vor dem A-Burst) auf 0 zurückgesetzt wird

- bei der Empfangssignal-Fensterung werden ab dem aktuellen Empfangssignal-Sample
t_paddcorrseqlen+t nocorrvals-1 B_samples
in einen Puffer kopiert, wobei

  o t_paddcorrseqlen die Länge der zero-padded Korrelationssequenz ist

  o t_nocorrvals die Anzahl zu berechnender Korrelationswerte ist.

- die SNIR-Schätzung erfolgt im FPGA nach der Formel

$$\text{SNIRest= t\_SNIRcorrfact * maxsqcorr / abs(recenerg * t\_corrseqenerg - maxsqcorr)}$$

Dabei ist

  o SNIRest das geschätzte SNIR (in linearem Maß)

  o maxsqcorr der im Teilkorrelations-Algorithmus gemessene maximale quadrierte Korrelationsbetrag

  o abs() die Betrag-Funktion, um numerische. Probleme zu umgehen (falls der Nenner des obigen Ausdrucks negativ wird)

  o recenerg die im Teilkorrelations-Algorithmus gemessene Energie im Empfangssignals über die Länge der (zero-padded) Korrelationssequenz

  o t_corrseqenerg die Energie der gespeicherten Korrelationssequenz; dieser Wert hängt vom Sendeburst ab, d.h., bei Bestimmung des ausgestrahlten Sendebursts wählt das Hardware-Modul unter den zwei möglichen Werten aus

  o t_SNIRcorrfact ein Korrektur-Faktor, der die Länge des Zero-Paddings in der Korrelationssequenz berücksichtigt; dieser Wert hängt vom Sendeburst ab, d.h., bei Bestimmung des ausgestrahlten Sendebursts wählt das Hardware-Modul unter den zwei möglichen Werten aus

- ein T-Burst gilt dann als gültig bzw. gefunden, wenn das geschätzte SNIRest größer als eine Schwelle t_SNIRthresh ist; diese Schwelle muss so gewählt werden, dass zwar noch genügend viele T-Bursts gültig erklärt werden, dass aber andererseits die Wahrscheinlichkeit des fälschlichen Fundes eines T-Bursts an einer Position, wo gar kein T-Burst ist, gering bleibt.

- wird ein T-Burst gefunden (SNIRest >= t_SNIRthresh), dann ist der T-Algo wieder synchronisiert und beginnt mittels seines T-Triggers, die nächsten Fensterstarts zu prädizieren; weiterhin werden die Korrelationswerte zur genaueren Analyse an das Software-Modul "Feinkorrelation" übergeben

- die Übergabe der Korrelationswerte an die Feinkorrelation stellt die unidirektionale Schnittstelle zwischen FPGA-Hardware und Software dar

- bei gültigen Bursts wird der T-Trigger für den nächsten Fensterstart ausgehend von der Position des im Teilkorrelations-Algorithmus gefundenen Korrelationsmaximums prädiziert; zu dieser Position werden t_burstperiod_Brnd B_samples für eine T-Burst-Periode hinzugezählt und t_noprecorrvals B_samples wieder abgezogen, damit das Fenster der Breite t_nocorrvals=2*t_noprecorrvals Korrelationswerten nahezu symmetrisch um das prädizierte nächste Korrelationsmaximum herum liegt

- zur Feststellung, ob der T-Algo gerade synchronisiert ist, wird ein Flag synchlossflag benutzt, das im Falle einer Synchronisierung den Wert 0 besitzt und 1 ist, wenn der T-Algo nicht synchronisiert ist

- während er synchronisiert ist, führt der T-Algo mit der Variablen nolosttracks stets Buch darüber, wieviele der letzten T-Bursts in Folge verloren worden sind,

- wird der aktuelle T-Burst nicht gefunden (SNIRest < t_SNIRthresh), dann wird überprüft, ob der T-Algo gerade synchronisiert ist; ist dies nicht der Fall, so wird sofort zum Warten auf den nächsten A-Pre-Trigger übergegangen

- ist hingegen der T-Algo noch synchronisiert, so wird geschaut, ob er mit dem Verlust des aktuellen T-Bursts auch die Synchronisation verliert; dies ist dann der Fall, wenn er zuvor schon t_losttrackthresh T-Bursts in Folge verloren hatte, d.h. nolosttracks >= t_losttrackthresh; in diesem Fall wird die Feinkorrelations-Software mittels der synchlossflag==1 angewiesen, einer sogenannten ZRE den Verlust der Synchronisierung mitzuteilen; damit weiß ein sogenannter Baler in der ZRE, dass fortan bis zu einer Re-Akquisition erst einmal keine TOA-Werte von diesem Empfänger kommen werden; weiterhin deaktiviert der T-Algo seinen T-Trigger, so dass jetzt nur noch eine erfolgreiche Re-Akquisition durch den A-Algo den T-Algo wieder lostriggern lassen kann

- sind bis (einschließlich) zum aktuellen T-Burst nicht mehr als t_losttrackthresh T-Bursts in Folge verlorengegangen (nolosttracks<t_losttrackthresh), dann wird die Feinkorrelation für die berechneten Korrelationswerte aktiviert, selbst wenn der T-Burst nicht als gültig gilt und die Feinkorrelation deshalb wahrscheinlich sehr schlechte Qualitätswerte ermitteln wird; weiterhin wird der T-Trigger für den nächsten Fensterstart ausgehend vom aktuellen Fensterstart prädiziert: zu dieser Position werden einfach t_burstperiod_Brnd B_samples (für eine T-Burst-Periode) hinzugezählt

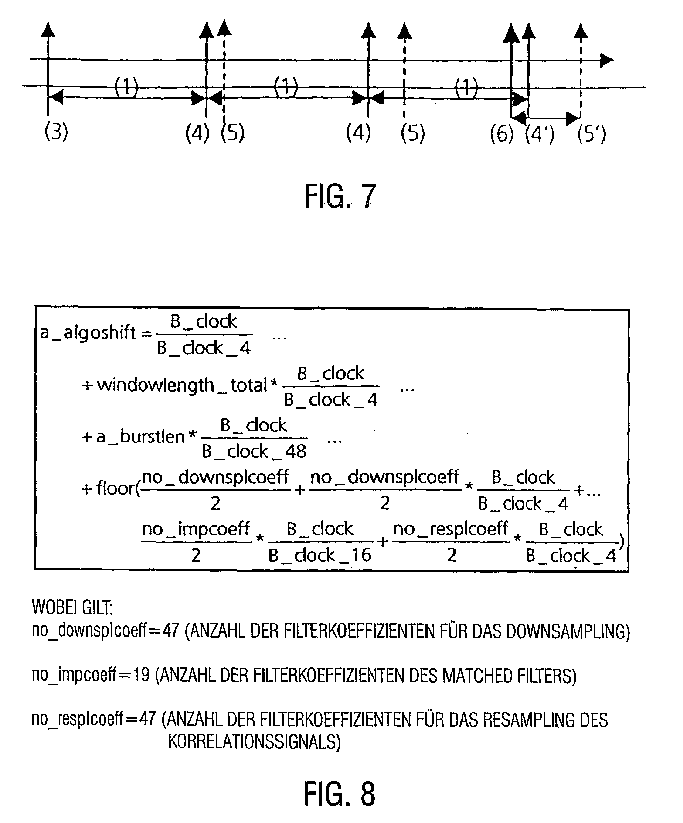

Fig. 7 zeigt ein Beispiel für einen Pre-Trigger des A-Algorithmus für t_losttrackthlesch = 2.

(1) t_burstperiod_B
(2) a_predist
(3) T-Trigger und korrekter Fensterstart des letzen gefundenen T-Bursts
(4) falscher (prädizierter) T-Trigger von nicht gefundenen T-Bursts
(5) korrekter Fensterstart für nicht gefundene T-Bursts
(6) Pre-Trigger des A-Algos abgeleitet aus A-Burst

Das Bild zeigt den Worst Case, wie der (prädizierte) Trigger des T-Algos vom korrekten Fensterstart weglaufen kann: In (3) wird zum letzten Mal tatsächlich ein T-Burst gefunden - hier stimmen also T-Trigger und der korrekte Fensterstart noch überein. Nun wird über t_burstperiod_B B_samples hinweg der nächste Fensterstart prädiziert und in (4) jeweils ein T-Trigger ausgelöst. Wenn wir maximalen Frequenzversatz haben, dann liegt der korrekte Fensterstart aber nicht in (4) sondern jeweils in (5), was sich aufgrund der verlängerten T-Burst-Periode stetig weiter von (4) entfernt. Nehmen wir an, dass beim Triggern in (4) jeweils keine T-Bursts gefunden werden. Der letzte T-Trigger wird in (4'), nämlich t_losttrackthresh+l (hier drei) T-Burst-Perioden nach dem letzten gefundenen T-Burst (3) prädiziert; noch weiter wird niemals prädiziert, weil nach t_losttrackthresh+l nacheinander verlorenen T-Bursts ein Synchronisation Loss erfolgt und fortan der T-Trigger deaktiviert ist (es kann dann nur noch der A-Algo triggern). Der zu (4') gehörige korrekte Fensterstart ist (5'); nehmen wir an, dass vor diesem T-Burst ein A-Burst liegt. Dann muss der A-Pre-Trigger in (6), also vor (4') kommen, damit der korrekte Fensterstart in (5') statt beim falschen prädizierten T-Trigger in (4') erfolgt. Dieser Abstand von (6) zu (5') ist a_predist >= (t_losttrackthresh + 1) * t_burstperiod_B* maxfreqoffsppm * 10-6.

Das Processing Delay, welches sich durch die Ausführung des Akquisitions-Algorithmus ergibt und im Block FIFO berücksichtigt werden muss, wird im folgenden durch die Parameter a_algoshift und a_pipdel beschrieben.

A_algoshift gibt die Differenz zwischen dem Start des Akquisitions-Bursts und dem gefundenen Korrelationspeak in B_samples an, welche sich aus den verwendeten Filterlängen bei jeweils unterschiedlicher Frequenz, der Länge des Akquisition-Bursts und dem Parameter Windowlength_total ergibt, während a_pipdel die Verzögerung in B_samples bezeichnet, die sich aus der Implementierung des Empfänger-Algorithmus in der Hardware ergibt.

In Fig. 8 ist eine Berechnung der Differenz veranschaulicht.

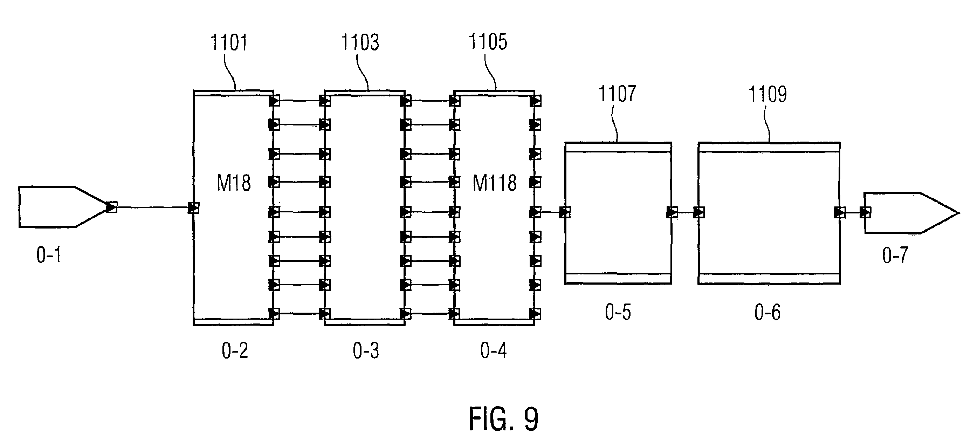

Fig. 9 zeigt einen Grundaufbau eines erfindungsgemäßen Empfängers für die Akquisition.

Der Empfänger umfasst einen Verarbeitungsblock 1101 mit einem Eingang und einer Mehrzahl von Ausgängen, die mit einem Filter 1103 gekoppelt sind. Das Filter 1103 weist eine Mehrzahl von Ausgängen aus, die mit einem Korrelationsblock 1105 gekoppelt sind. Der Korrelationsblock 1105 umfasst einen Ausgang, der mit einer Überabtast-Einrichtung 1107 gekoppelt ist. Die Überabtast-Einrichtung 1107 weist einen Ausgang auf, der mit einem weiteren Verarbeitungs-Block 1109 gekoppelt ist. Der weitere Verarbeitungs-Block 1109 weist einen Ausgang auf.

Das von dem Verarbeitungs-Block 1101 empfangene Signal wird unterabgetastet und es wird eine fs/4 Mischung durchgeführt, wobei fs die Abtastfrequenz bezeichnet. Das resultierende Signal wird in Polyphasen aufgeteilt, wobei die Polyphasen über die Mehrzahl der Ausgänge dem Filter 1103, das ein Matched-Filter sein kann, zugeführt werden. Das Filter 1103 umfasst beispielsweise eine Mehrzahl von Einzelfiltern, wobei jedes der Einzelfilter der jeweiligen Polyphase zugeordnet ist. Auf der Basis der gefilterten Signale wird in dem Korrelationsblock 1105 eine Korrelation durchgeführt, die dann in der Überabtasteinrichtung 1107 überabgetastet wird. Das von dem Korrelationsblock 1105 gelieferte Signal wird dem weiteren Verarbeitungsblock 1109 zugeführt. Der weitere Verarbeitungsblock 1109 ist ausgebildet, um eine Berechnung der Positionen der Korrelationsmaxima durchzuführen sowie um ein Trägersignal auszugeben.

Der Eingang 0-1 gibt das ins komplexe Basisband gemischte Empfangssignal im Abtasttakt B_clock an die Ebene 0-2 weiter.

Am Ausgang 0-7 wird das in Ebene 0-6 für einen der 150 Sender erhaltene Träger-Signal im Abtasttakt B_clock_4 an den Block weitergeleitet, in dem Teil-Korrelationswerte im Tracking-Algorithmus berechnet werden, weitergegeben. Das Träger-Signal hat den Wert 1 im Falle eines detektierten ten Korrelationsmaximums, ansonsten ist das Träger-Signal identisch 0. Um aufgrund dieses Träger-Signals den Ausschnitt innerhalb dessen der dem detektierten Akquisitions-Burst folgende Tracking-Burst gesucht werden soll, herausschneiden zu können, muss das am Eingang 0-1 anliegende Signal, also das "Empfangs-Signal", abhängig von den Gruppen-Laufzeiten der verwendeten Filter, der für den Akquisitions-Algorithmus benötigten Zeit usw. verzögert werden.

Wie es bereits erwähnt wurde, ist der in Fig. 9 gezeigte Empfänger ausgebildet, um eine Akquisition (Grob-Synchronisation) im Falle von einer Mehrzahl von Sendern, auf die synchronisiert werden soll, durchzuführen. Die Ebene 0-4 hat daher beispielsweise einen Ausgang für jeden der 150 Sender. Damit existieren die Blöcke 0-5 und 0-6 sowie der Ausgang 0-7 ebenfalls 150-Mal.

Gemäß einem weiteren Aspekt schafft die vorliegende Erfindung eine Vorrichtung zum Synchronisieren eines Empfängers und eines Senders, wobei der Sender ausgebildet ist, um ein Synchronisations-Signal, das auf einem Grobsynchronisationssignal für eine Grob-Synchronisation und auf einem Feinsynchronisationssignal für eine Fein-Synchronisation basiert, auszusenden.

Die Vorrichtung zum Synchronisieren umfasst eine Abtast-Einrichtung zum Abtasten einer Empfangs-Version des Synchronisations-Signals, um ein Empfangs-Signal zu liefern, eine Signal-Verarbeitungseinrichtung, wie sie obenstehend beschrieben worden ist, wobei die Signal-Verarbeitungseinrichtung ausgebildet ist, um ein Positions-Signal zu liefern, das eine Position des Synchronisations-Signals in dem Empfangssignal anzeigt und eine Steuereinrichtung zum Steuern eines Abtastzeitpunktes der Abtasteinrichtung in Abhängigkeit von dem Positionssignal, um den Empfänger und den Sender zu synchronisieren.

Durch die Steuerung der Abtastzeitpunkte der Abtast-Einrichtung kann somit eine Block-Synchronisation erreicht werden.

Neben einer Empfangsstruktur liefert die vorliegende Erfindung gemäß einem weiteren Aspekt eine Vorrichtung zum Erzeugen eines Synchronisationssignals, das aussendbar ist, um einen Empfänger und einen Sender zu Synchronisieren. Die Vorrichtung umfasst eine Einrichtung zum Liefern eines Grobsynchronisationssignals mit einer ersten Bandbreite und eines Feinsynchronisationssignals mit einer zweiten Bandbreite, wobei die zweite Bandbreite geringer als die erste Bandbreite ist, und einer Einrichtung zum Bereitstellen des Synchronisationssignals unter Verwendung des Grobsynchronisationssignals und des Feinsynchronisationssignals.

Das Synchronisationssignal umfasst dabei das Grobsynchronisationssignal sowie das Feinsynchronisationssignal sowie eine beliebige Kombination der beiden Signale, wobei die Einrichtung zum Bereitstellen ausgebildet ist, um das Feinsynchronisationssignal beispielsweise zeitlich nach dem Grobsynchronisationssignal bereit zu stellen. Auf diese Weise wird sichergestellt, dass bei einer Aussendung des Synchronisationssignals das Grobsynchronisationssignal, das für eine Grob-Synchronisation im Empfänger vorgesehen ist, vor dem Feinsynchronisationssignal ausgesendet wird, so dass, im Empfänger, zunächst das Grobsynchronisationssignal detektiert wird, um einen Abschnitt des Empfangs-Signals festzulegen, in dem das Feinsynchronisationssignal liegt, und um unter Verwendung des Feinsynchronisationssignals eine Synchronisation durchzuführen.

Die Einrichtung zum Bereitstellen kann ausgebildet sein, um das Feinsynchronisationssignal an das Grobsynchronisationssignal anzufügen, so dass die so entstandene Präambel (Synchronisationssignal) beispielsweise zweiteilig ist. Die Einrichtung zum Bereitstellen kann ferner ausgebildet sein, um eine Mehrzahl von Feinsynchronisationssignalen bzw. um eine Mehrzahl von Kopien der Feinsynchronisationssignale aneinander anzufügen, so dass im Empfänger eine genauere Positionsbestimmung des Feinsynchronisationssignals möglich ist.

Gemäß einem weiteren Aspekt ist die Einrichtung zum Bereitstellen ausgebildet, um das Feinsynchronisationssignal zeitlich nach dem Grobsynchronisationssignal so bereitzustellen, dass zwischen einer Bereitstellung des Grobsynchronisationssignals und einer Bereitstellung des Feinsynchronisationssignals ein vorbestimmtes Zeitintervall liegt. Dieses Zeitintervall kann beispielsweise gleich einer Detektionsverzögerung im Empfänger sein und wird eingefügt, um nach einer Detektion des Grobsynchronisationssignals im Empfänger das Feinsynchronisationssignal noch erfassen zu können. Darüber hinaus kann die Einrichtung zum Bereitstellen ausgebildet sein, um eine Mehrzahl von Feinsynchronisationssignalen zeitlich nach dem Grobsynchronisationssignal bereit zu stellen. Die Feinsynchronisationssignale können entweder direkt aufeinander folgen oder es kann zwischen den Feinsynchronisationssignalen wieder eine Zeitverzögerung eingestellt werden, mit der ein Abstand zwischen aufeinander folgenden Feinsynchronisationssignalen beispielsweise einer Größenordnung einer Verzögerung aufweist, die mit einer Positionsbestimmung des Feinsynchronisationssignals in dem Abschnitt des Empfangs-Signals einhergeht.

Die Einrichtung zum Bereitstellen kann ferner ausgebildet sein, um die Mehrzahl von Feinsynchronisationssignalen beispielsweise als eine Folge durch zeitliches Anfügen von Kopien des Feinsynchronisationssignals aneinander bereit zu stellen, so dass, wie es bereits erwähnt worden ist, zwischen den Feinsynchronisationssignalen keine Verzögerung auftritt.

Die Einrichtung zum Bereitstellen umfasst jedenfalls ein Impulsformungsfilter zum Filtern des Grobsynchronisationssignals und des Feinsynchronisationssignals. Das Impulsformungsfilter kann ferner ausgebildet sein, um das gesamte Synchronisationssignal zu filtern. Bei dem Impulsformungsfilter kann es sich beispielsweise um ein Cosinus-Roll-off-Filter handeln mit einem Roll-off-Faktor, der gleich 1 ist. In diesem Fall hat die Filter-Charakteristik im Frequenzbereich eine reine Cosinus-Form.

Bei der vorgesehlagen Vorrichtung zum Erzeugen eines Synchronisationssignals hat das Impulsformungsfilter eine variable Charakteristik, so dass das Feinsynchronisationssignal und das Grobsynchronisationssignal unterschiedlich gefiltert werden.

Gemäß einem weiteren Aspekt ist die Einrichtung zum Liefern ausgebildet, um das Grobsynchronisationssignal aus einer Datenfolge und um das Feinsynchronisationssignal aus einer weiteren Datenfolge zu erzeugen, wobei eine Bandbreite der Datenfolge geringer als eine Bandbreite der weiteren Datenfolge ist.

Gemäß einem Ausführungsbeispiel umfasst die Einrichtung zum Liefern einen Speicher, in dem die Datenfolge und die weitere Datenfolge abgelegt sind und abgerufen werden können. Dabei kann das Grobsynchronisationssignal beispielsweise gleich der Datenfolge sein und das Feinsynchronisationssignal die weitere Datenfolge sein.

Die Einrichtung zum Liefern kann ferner einen Generator umfassen, der ausgebildet ist, um die Datenfolge oder/und die weitere Datenfolge zu erzeugen. Der Generator kann beispielsweise ausgebildet sein, um die Datenfolge aus einem Galois-Feld mit vier Elementen zu erzeugen. Darüber hinaus kann der Generator ausgebildet sein, um die weitere Datenfolge aus einem Galois-Feld mit vier Elementen oder mit mehr als vier Elementen zu erzeugen. Es kann aber auch ein Galois-Feld mit zwei Elementen verwendet werden.

Zum Erzeugen der Datenfolge und/oder zum Erzeugen der weiteren Datenfolge kann der Generator einen Schieberegister umfassen, wobei der Generator ausgebildet ist, um eine Initialbelegung des Schieberegisters einzustellen. Dabei kann der Schieberegister geeignet verdrahtet sein, so dass in Abhängigkeit von der jeweiligen Initialbelegung verschiedene Datenfolgen und verschiedene weitere Datenfolgen realisierbar sind.

Die Einrichtung zum Liefern kann ferner eine Zuordnungs-Einrichtung umfassen, um jedem Element der Datenfolge eine komplexwertige Zahl zuzuordnen, um eine komplexwertige Folge zu erhalten, und/oder um jedem Element der weiteren Datenfolge eine komplexwertige Zahl zuzuordnen, um eine weitere komplexwertige Folge zu erhalten. Mit anderen Worten ausgedrückt ist die Zuordnungs-Einrichtung ausgebildet, um die Datenfolge auf die komplexwertige Folge zu mappen, und um die weitere Datenfolge auf die weitere komplexwertige Folge zu mappen, wobei die Datenfolge und die komplexwertige Folge dieselbe Anzahl von Koeffizienten aufweisen, und wobei die weitere Datenfolge und die weitere komplexwertige Folge dieselbe Anzahl von Koeffizienten aufweisen. Dabei kann die Anzahl der Koeffizienten der komplexwertigen Folge sich von der Anzahl der Koeffizienten der weiteren komplexwertigen Folge unterscheiden. Beide komplexwertigen Folgen können jedoch dieselbe Anzahl der Koeffizienten umfassen.

Das Grobsynchronisationssignal und/oder das Feinsynchronisationssignal können Bandpasssignale oder Basisbandsignale sein. Handelt es sich bei dem Grobsynchronisationssignal um ein Bandpasssignal, so umfasst die Einrichtung zum Liefern ferner einen Aufwärts-Mischer, um das Grobsynchronisationssignal durch Aufwärtsmischen der komplexen Folge zu erzeugen. Der Aufwärts-Mischer kann ferner ausgebildet sein, um das Feinsynchronisationssignal durch Aufwärtsmischen der weiteren komplexwertigen Folge zu erzeugen. Da das Grobsynchronisationssignal schmalbandiger als das Feinsynchronisationssignal ist, belegt das Grobsynchronisationssignal einen Bandpass-Bereich mit einer Mittenfrequenz, die sich von einer weiteren Mittenfrequenz eines weiteren Frequenz-Bereichs unterscheiden kann, der von dem Feinsynchronisationssignal belegt ist. Gemäß einem weiteren Aspekt können die Mittenfrequenz und die weitere Mittenfrequenz jedoch gleich sein.

Gemäß einem weiteren Aspekt kann die Einrichtung zum Liefern ausgebildet sein, um ein weiteres Feinsynchronisationssignal, dessen Bandbreite größer als die Bandbreite des Grobsynchronisationssignals ist, zu liefern. Das weitere Feinsynchronisationssignal kann sich von dem Feinsynchronisationssignal unterscheiden und beispielsweise orthogonal hierzu sein. Die Einrichtung zum Bereitstellen ist dann ausgebildet, um das weitere Feinsynchronisationssignal wie das Feinsynchronisationssignal zu behandeln, wie es obenstehend beschrieben worden ist.

Gemäß einem weiteren Aspekt kann die Einrichtung zum Liefern ausgebildet sein, um eine Information durch eine Phasenänderung zwischen aufeinander folgenden Werten des Feinsynchronisationssignals in dem Feinsynchronisationssignal zu kodieren. Beispielsweise ist die Einrichtung zum Liefern ausgebildet, um die Information durch einen Phasensprung um 180 Grad zwischen einer Anzahl von Werten des Feinsynchronisationssignals und einer weiteren Anzahl von Werten des Feinsynchronisationssignals zu kodieren. Durch einen Phasensprung kann somit zusätzlich zu der Synchronisationsinformation beispielsweise ein Bit übertragen werden. Gemäß einem weiteren Aspekt kann das Feinsynchronisationssignal jedoch eine Mehrzahl von Phasensprüngen aufweisen, so dass eine Informationsfolge kodiert wird.

Gemäß einem weiteren Aspekt kann die Einrichtung zum Liefern ausgebildet sein, um eine Information durch eine Phasenänderung, beispielsweise einen Phasensprung um 180 Grad, zwischen aufeinander folgenden Werten des Grobsynchronisationssignals zu kodieren. Auf diese Weise wird der Empfänger in die Lage versetzt, eine Zusatzinformation durch eine Phasenänderungs-Detektion zu erfassen.

Die erfindungsgemäße Vorrichtung zum Erzeugen des Synchronisationssignals kann ferner einen Sender zum Aussenden des Synchronisationssignals umfassen. Der Sender kann beispielsweise ein Funksender sein.

Gemäß einem weiteren Aspekt liefert die folgende Erfindung eine Sendeeinrichtung mit einer Vorrichtung zum Erzeugen eines Synchronisationssignals, wie sie obenstehend beschrieben ist, eine Steuerungseinrichtung zum Ansteuern der Einrichtung zum Bereitstellen, so dass eine vorbestimmte zeitliche Abfolge der Grobsynchronisationssignale und der Feinsynchronisationssignale erzielt wird sowie einen Sender, um das Synchronisationssignal, das die zeitliche Abfolge der Grobsynchronisationssignale und der Feinsynchronisationssignale umfasst, auszusenden.

Erfindungsgemäß ist der Sender ausgebildet, um schmalbandige Acquisitions-Bursts auszusenden, mit denen eine aufwandsgünstige Auf-Synchronisation (Acquisition) auf das Signal eines Senders möglich ist. Dabei soll mit Hilfe des A-Bursts die Position des darauffolgenden T-Bursts vorausgesagt werden. Der Sender sendet breitbandige Tracking-Bursts aus. Diese sind so gestaltet, dass der Zeitpunkt ihres Eintreffens im Empfänger genau gemessen werden kann. Der Sender überträgt ferner Daten die beispielsweise in den T-Burst eingetastet sind (eingetastete Datenübertragung), mit einer niedrigeren Datenrate. Die Daten können mit Hilfe der bereits erwähnten Phasenänderung eingetastet werden.

Der Sender kann ferner ausgebildet sein, um in beispielsweise einem künftigen Spielzeugsystem Daten mit einem Burst-Übertragungsverfahren, welches sehr aufwandsarm empfangbar ist, zu übertragen (burstartige Datenübertragung).

Der Acquisitions-Burst (Grobsynchronisationssignal) dient der kostengünstig realisierbaren Synchronisation der Empfänger auf einzelne Sender beispielsweise in einem Multisender-Multiempfänger-Szenario. Die Acquisition soll einen groben Schätzwert für den Senderzeitpunkt des zur Positionsbestimmung verwendeten Tracking-Bursts liefern. Die Acquisitions-Bursts dienen sowohl zur initialen Synchronisation (Acquisition) als auch zur Re-Synchronisation (Re-Acquisition) im Falle eines Verlustes des Trackings.

Soll der Empfänger auf eine Mehrzahl von Sendern synchronisierbar sein, so müssen die einzelnen Sender unterscheidbar sein. Die einzelnen Sender, die jeweils ausgebildet sind, um die erfindungsgemäßen Synchronisationssignale auszusenden, nutzen dabei bevorzugt unterschiedliche Sequenzen einer bestimmten Länge, um eine Unterscheidung zu ermöglichen. Diese Sequenzen sind aus Gründen der kostenarmen Empfänger-Implementierung wesentlich schmalbandiger als die Tracking-Bursts (Feinsynchronisationssignale). Um dennoch eine hinreichend gute Unterscheidung erzielen zu können, können die einzelnen Sender beispielsweise 9 unterschiedliche "Unterträger" des verwendeten Frequenzbandes nutzen.

Die Zuteilung der relevanten Parameter (Sequenz, Frequenz) kann beispielsweise durch eine zentrale Datenbank erfolgen, die sicherstellt, dass keine zwei beliebigen Sender die gleiche Sequenz auf der gleichen Frequenz verwenden. Zusätzlich können sich weitere Randbedingungen bei der Sequenz-Zuteilung ergeben, die durch externe Programmierung abgefangen werden.

Die Sende-Sequenzen (Datenfolgen bzw. weitere Datenfolgen) können beispielsweise mittels eines Generators unter Verwendung eines Software-Programms, mit dem eine digitale Signalverarbeitung bzw. -übertragung simulierbar ist, erzeugt werden. Beispielsweise werden hierzu Sendesequenzen aus GF 4 (Galois-Feld mit vier Elementen) verwendet. Die Polynome für die Generierung der Sequenz können beispielsweise aus "4-Phase-Sequences with near-optimum Correlation Properties" von Serdar Boztas, Roger Hammons und Vijay Kumar, IEEE Transactions on Information Theory, vol. 38, Nr. 3, Mai 1992, Seite 1101 ff, entnommen werden. Beispielsweise nehme man die dort abgedruckten Polynome und vertausche die Reihenfolge, z.B.: angegeben [11131123] und erzeuge [32113111] in Software.

Das Generatorpolynom ist zu [32113111] definiert. Die verschiedenen Sequenzen (Datenfolgen) erhält man durch Variation der initialen Belegung des Schieberegisters. Dabei sollte darauf geachtet werden, dass kein interner Registerwert in irgendeiner bereits erstellten Folge vorkommt, da die so entstehenden Folgen nicht mehr unkorreliert wären.

Die Symbolrate ist beispielsweise zu B_clock_48 festgelegt, d.h. $f_{symb}$ = 1/48 * B_clock. Die auf jeden Fall mögliche Länge der Sendesequenzen soll beispielsweise 511 Symbole betragen.

Wie es bereits erwähnt worden ist, können die Acquisitions-Bursts spektral geformt werden. Hierzu wird die aus Elementen der Menge {0,1,2,3} bestehende Sequenz nun gemapped, gefiltert und auf einer bestimmten Trägerfrequenz ausgesendet werden.

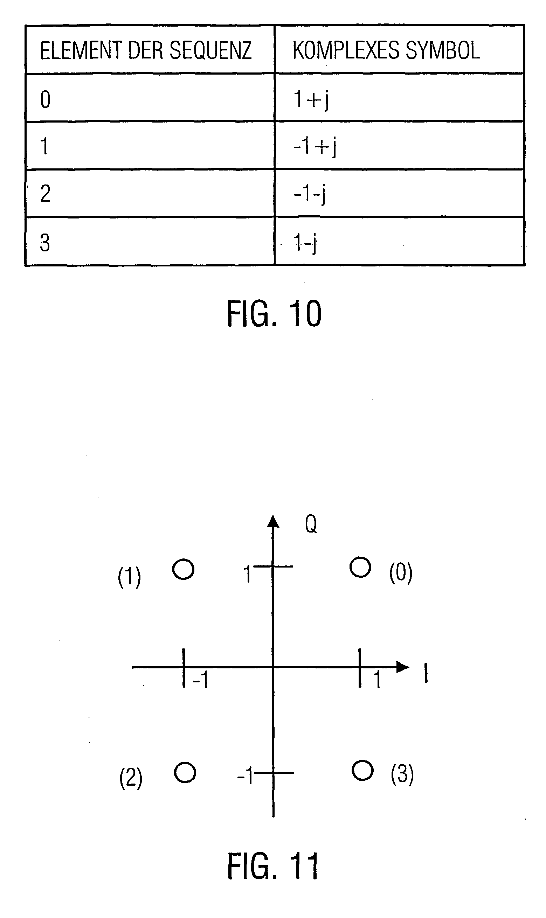

Bei dem Mapping (Zuordnung) wird aus einem Element durch das Mapping das dazu gehörige Symbol erzeugt. In Fig. 10 ist beispielhaft eine Vorschrift abgebildet, nach der die Sequenz gemapped werden kann.

Fig. 11 zeigt ein Konstellations-Diagramm, in dem die Punktevorgabe veranschaulicht ist.

Die Impulsformung geschieht durch ein square-root raised cosine filter mit einem Roll-off Faktor $\alpha = 1{,}0$. Die dazu gehörige Formel für die Übertragungsfunktion lautet

$$H(f) = 1 \qquad \text{für} \quad |f| < f_N(1 - \alpha)$$

$$H(f) = \left\{ \frac{1}{2} + \frac{1}{2} \sin \frac{\pi}{2 f_N} \left[ \frac{f_N - |f|}{\alpha} \right] \right\}^{\frac{1}{2}} \text{für } f_N(1 - \alpha) \leq |f| \leq f_N(1 + \alpha)$$

$$H(f) = 0 \qquad \text{für } |f| > f_N(1 + \alpha)$$

$$f_N = \frac{B\_clock\_48}{2}$$

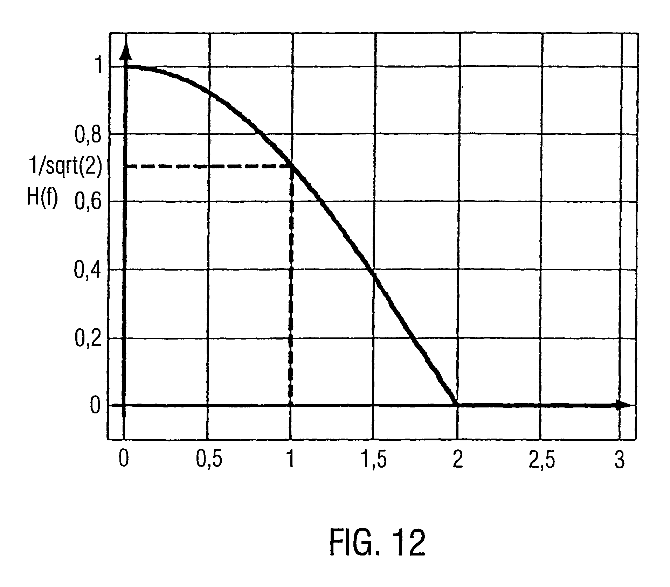

In Fig. 12 ist die Übertragungsfunktion des Filters dargestellt.

Das entstandene, bei einer minimalen Abtastrate von 2 * B_clock_48 vorliegende komplexe Signal ist nun beispielsweise auf 9 unterschiedliche Frequenzbänder zu verteilen. Diese Verteilung kann von dem oben beschriebenen Aufwärtsmischer durchgeführt werden.

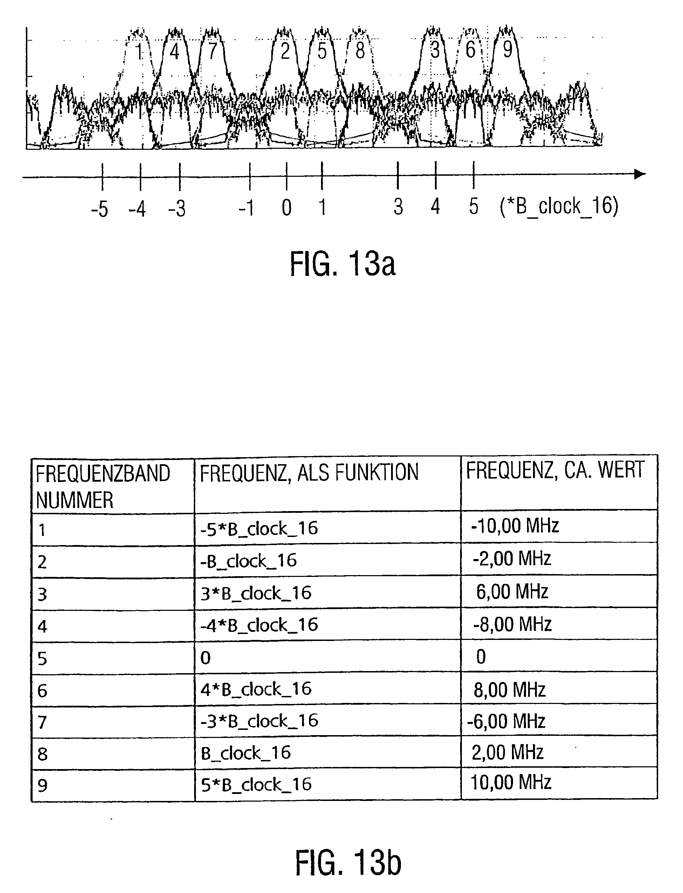

Fig. 13a veranschaulicht die Verteilung des komplexen Signals auf 9 unterschiedliche Frequenzbänder. Dabei werden folgende Trägerfrequenzen ausgewählt und entsprechend der in Fig. 13b dargestellten Tabelle nummeriert. Dabei bezieht sich die Angabe relativ zur Trägerfrequenz der T-Bursts, die beispielsweise 2445 MHz beträgt.

Die T-Bursts sind im Sender programmierbar. Die T-Bursts weisen nach der Ausstrahlung beispielsweise folgende Eigenschaften auf: ihre Bandbreite überschreitet den Wert t_burstbw nicht, ihre zeitliche Dauer beträgt ungefähr den einstellbaren Wert t_burstlen B_cycles (plus zusätzliche zeitliche Aufweitung beim Übergang vom einprogrammierten B_samples zum physikalischen Signal, z.B. Interpolation, dispersive analoge Schaltungen etc.), die maximale zeitliche Dauer beträgt t_burstmaxlen B_cycles (plus die oben genannten Aufweitungen), was durch die Senderimplementierung vorgegeben wird, ihr SNIR nach dem Senderausgang beträgt den Wert Sender SNIR oder besser.

Erfindungsgemäß können in der Folge zwei Arten von T-Bursts unterschieden werden: die einzelnen T-Bursts, sowie sie nach ihrer Erzeugung und vor der Programmierung vorliegen, d.h. ohne zero-padding, und die (in den Sender) einprogrammierten T-Bursts, bei denen gegebenenfalls noch die Längenanpassung durch Zero-Padding erfolgt.

Im Sender können zwei T-Bursts einprogrammiert werden, die nach einem programmierbaren Auswahlschema ausgestrahlt werden. Diese beiden T-Bursts werden als T-Burst 0 bzw. T-Burst 1 bezeichnet. Jeder der beiden T-Bursts liegt in komplexwertigen B_samples vor, d.h. das auszustrahlende T-Burst-Signal wird in I- und Q-Komponente jeweils mit der Samplefrequenz B_clock abgetastet.

Die T-Bursts werden derart erzeugt, dass sie in der verwendeten 6-Quantisierung optimal ausgesteuert werden. D.h. es wird der maximal darstellbare Wert +31 vom Signal tatsächlich angenommen.

Die Längen der im Sender einprogrammierten T-Burst 0 und 1 sind *gemeinsam* einstellbar, d.h. sie sind stets gleich, und sie betragen t_sendburstlen (in B_samples). Vor dem Einprogrammieren in den Sender dürfen die beiden T-Bursts leicht verschiedene Längen t_burstlen (jeweils für den T-Burst 0 bzw. 1) besitzen, die sich nur um wenige B_samples unterscheiden. Ein Angleichen von Bursts verschiedener Länge erfolgt mittels Zero-Padding (s.u.). Die maximale Länge der T-Bursts ist t_burstmaxlen (in B_samples).

Die Granularität, in der die Länge der einprogrammierten T-Bursts variieren kann, ist (aus Implementierungsgründen) jeweils 8 B_samples, d.h. für den Sender sind die Burstlängen bis zu einem Vielfachen von 8 mit Nullen aufzufüllen (Zero-Padding). Der kürzere der beiden T-Bursts ist dabei mit mehr Nullen aufzufüllen als der längere, bei dem maximal 7 Nullen aufgefüllt werden müssen. Ist tX_burstlen die Länge des ursprünglichen T-Bursts X (ohne Zero-Padding), so ist also

$$t\_sendburstlen=ceil(max(t0\_burstlen, t1\_burstlen)/8)*8.$$

Damit die Mitte des ursprünglichen T-Bursts X (ohne zusätzliche Nullen) nahezu in der Mitte des einprogrammierten Zero-Padded Bursts tX_sendburst liegt (das ist für die Eintastung des zu übertragenden Channelbits nötig, werden am Beginn des T-Bursts

$$tX\_startpadlen = ceil((t\_sendburstlen - tX\_burstlen)/2)$$

Nullen aufgefüllt, und der Rest, also

$$floor((t\_sendburstlen - tX\_burstlen)/2)$$

Nullen werden an seinem Ende aufgefüllt. Somit sind am Ende des Bursts genau so viele Nullen bzw. maximal eine Null mehr aufgefüllt wie an seinem Beginn.

Die Acquisitions-Bursts und Tracking-Bursts können beispielsweise im Zeitmultiplex übertragen werden.

Beim Multiplex aus A- und T-Bursts wird innerhalb einer Akquisitions-Periode immer genau ein A-Burst und anschließend at_multipl_len T-Bursts gesendet, wobei der Wert at_multipl_len einstellbar ist. Dieses Schema wird periodisch fortgeführt. Zwischen dem A- und dem ersten T-Burst innerhalb einer Periode, zwischen den einzelnen T-Bursts und zwischem dem letzten T-Burst einer Periode und dem A-Burst der nächsten Periode sind einstellbare Abstände einzuhalten.

Im Sender existiert ein Zähler at_multipl__cntr, der immer vor dem Beginn des A-Bursts auf 0 zurückgesetzt wird und nach jedem komplett abgestrahlten T-Burst um 1 erhöht wird. Der maximale Wert von at_multipl_cntr beträgt somit at_multipl_len.

Für den Zeit-Multiplex wird der in B_samples vorliegende A-Burst betrachtet.

Wenn im folgenden vom "relevanten A-Burst" (immer in B_samples) die Rede ist, dann ist damit nur der unten beschriebene Teil des "erzeugten A-Bursts" (immer in B_samples) gemeint, der von einem in B_samples_48 vorliegenden A-Burst ausgehend durch Sendeimpulsformung, Upsampling und Upconversion erzeugt worden ist (entweder durch Matlab oder unmittelbar im Sender selbst), so wie er am Multiplexer-Eingang vorliegt.

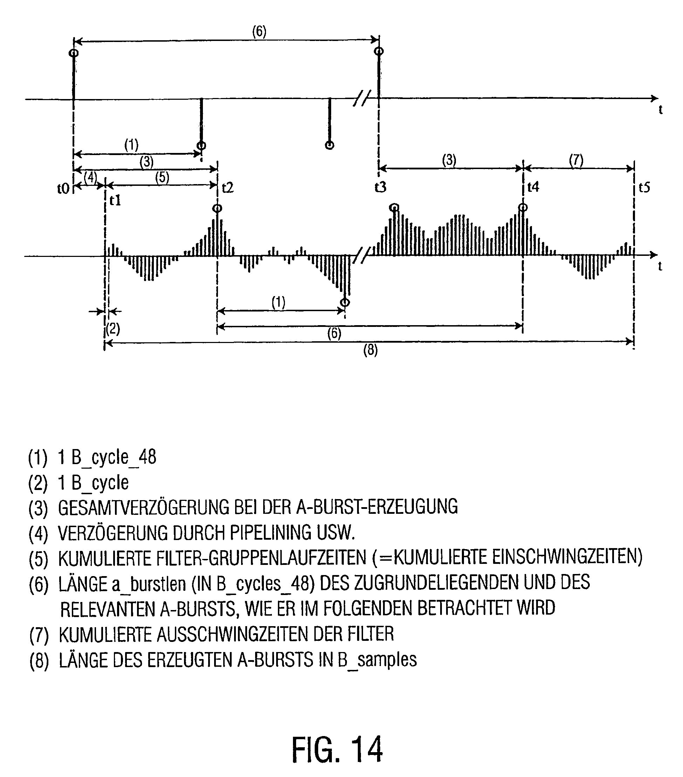

Fig. 14 verdeutlicht, welcher Teil des erzeugten A-Bursts mit "relevanter A-Burst" gemeint ist. Die obere Hälfte des Bildes zeigt den "zugrundeliegenden A-Burst" in B_samples_48 (der Abstand (1) zwischen zwei Samples ist somit B_cycle_48). Seine gesamte Länge (6) ist a_burstlen (in B_cycles_48).

Dabei werden Verzögerungen und Zeitdauern des in B_samples_48 gespeicherten A-Bursts, des (durch Sendeimpuls-Formung, Überabtastung und Aufwärtsmischung) erzeugten A-Bursts in B_samples sowie die relevanten A-Bursts verdeutlicht.

Die untere Hälfte zeigt den erzeugten A-Burst in B_samples (der Abstand (2) zwischen zwei Samples ist somit B_cycle). Zum Zeitpunkt t0 wird das erste B_sample 48 des gespeicherten A-Bursts in die Signalerzeugung (Sendeimpulsformung, Upsampling und Upconversion) gegeben. Je nach Implementierung erscheint dieses erste B_sample_48 des gespeicherten A-Burst erst zum Zeitpunkt t2 im erzeugten A-Burst, d.h. nach einer Verzögerung (3). Diese Verzögerung besteht aus zwei Anteilen: Durch Pufferung bei der Signalerzeugung für Pipelining usw. entsteht eine initiale Verzögerung (4) vom Zeitpunkt t0, wo das erste B_sample_48 des gespeicherten A-Bursts in die Signalerzeugung eingeschleust wird, bis zum Zeitpunkt t7, wo das erste gültige B_sample des erzeugten A-Bursts von dieser Signalerzeugung ausgegeben wird. Weiterhin haben alle benutzten Filter (Sendeimpulsformer und Upsampling-Tiefpässe) Gruppenlaufzeiten, die sich zu einer Filter-Laufzeit (5) kumulieren. Wenn der erzeugte A-Burst offline mit Matlab erstellt wird, dann ist die Verzögerung (4) =0, falls nicht der Sender zusätzliches Pipelining einführt. Die Verzögerung durch das Einschwingen der Filter, d.h. deren Gruppenlaufzeiten, sind jedoch stets vorhanden und zu beachten.

Wenn das letzte B_sample_48 des gespeicherten A-Bursts zum Zeitpunkt t3 in die Signalerzeugung gegeben wird, dann erscheint es ebenfalls erst zum Zeitpunkt t4 nach der Verzögerung (3) als B_sample am Ausgang der Signalerzeugung. Das letzte gültige B_sample des erzeugten A-Bursts wird zum Zeitpunkt t5 von der Signalerzeugung ausgegeben. Nach der Zeitdauer (7), also t5 - t4, sind alle Filter ausgeschwungen. Bei den üblicherweise verwendeten Filtern mit symmetrischer Impulsantwort ist die Zeitdauer (7) gleich den kumulierten Gruppenlaufzeiten (5).

Die kumulierten Impulsverbreiterungen durch dispersive Filter (d.h. Summe aus Ein- und Ausschwingzeiten, (5)+(7)) dürfen den Wert a_maximpwiden B_samples nicht überschreiten, damit ein ordungsgemäßes Funktionieren des Gesamtsystems, insbesondere des Empfängers, gewährleistet ist.

Die Gesamtlänge (ausgedrückt in gültigen B_samples) des erzeugten A-Bursts ist somit (8), also die Summe aus (5), (6) und (7). Da (5) und (7) implementierungsabhängig sind, wird im folgenden stets (6) (also a_burstlen, ausgedrückt in B_samples_48) als die Länge des relevanten A-Bursts betrachtet. Andere Darstellung: in der Einheit B_samples ist a_burstlen_B der Abstand vom ersten zum letzten B_sample, die jeweils zu dem ersten bzw. letzten B_sample_48 des gespeicherten A-Bursts zugehörig sind.

Die im folgenden betrachtete Länge des relevanten A-Bursts enthält somit auch keinerlei Signal-Verbreiterungen durch die dispersiven Filter-Impulsantworten bei der Signalerzeugung (Sendeimpulsformer und Upsampling-Tiefpässe) sowie keine etwaigen weiteren implementierungsbedingten Signal-Verbreiterungen.

Das in Fig. 14 unten gezeichnete Schema visualisiert den Multiplex, die Burstdauern und die Abstände. Das dargestellte Schema spiegelt den Burst Multiplex an genau der folgenden festgelegten Stelle im Sender wieder: alle unten angegebenen Zeitverhältnisse gelten im Multiplexer, der im Sender zwischen dem A- und dem T-Burst hin- und herschaltet. Die A- und T-Bursts liegen an dieser Stelle also beide in B_samples vor.

Mit dem Begriff T-Burst können ferner beispielsweise zwei einprogrammierte T-Bursts bezeichnet werden, die auszuwählen sind, wie es obenstehend beschrieben ist.

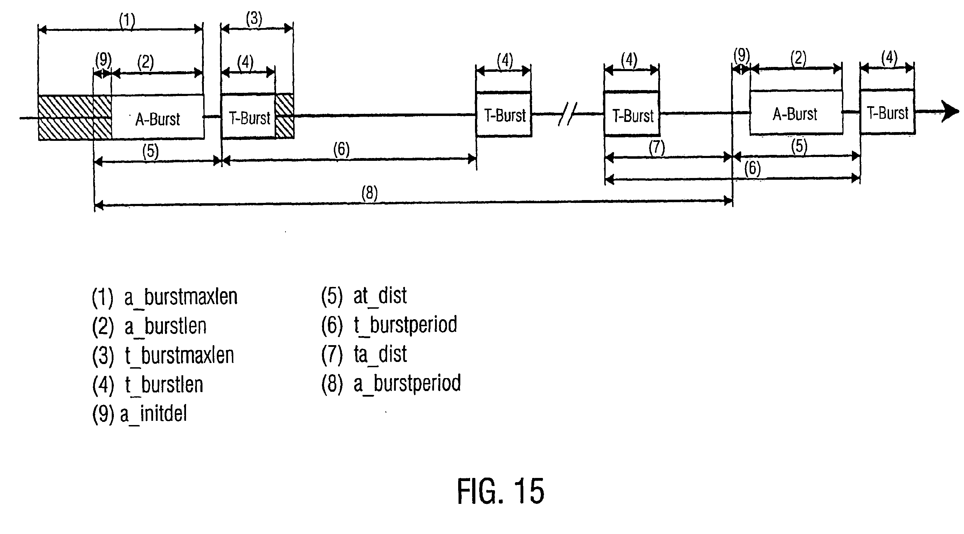

Fig. 15 verdeutlicht die Zeitdauern und Abstände im Burst-Multiplex.

Der relevante A-Burst besitzt die Länge a_burstlen (2) (in B_cycles_48) (siehe obige Erklärung zum rel. A-Burst und dessen Länge), was kürzer als die maximale Länge a_burstmaxlen (1) (in B_cycles_48) des rel. A-Bursts sein muss.

Der T-Burst besitzt die Länge t_burstlen (4)) (in B_cycles), was kürzer als die maximale T-Burst-Länge t_burstmaxlen (3) (in B_cycles) sein muss.

Die Pause zwischen dem hinteren Ende des rel. A-Bursts und dem Beginn des T-Bursts sollte einen festen Wert behalten, auch wenn (A- und/oder T-)Bursts unterschiedlicher Längen im System verwendet werden. Wenn der rel. A-Burst kürzer oder länger gemacht wird, dann sollte also nur sein Beginn (*vorderer Anschlag*) entsprechend verschoben werden. Wenn der T-Burst kürzer oder länger gemacht wird, dann sollte sich also nur sein hinterer Anschlag entsprechend verschieben.

Der Abstand vom Beginn des rel. A-Bursts zum Beginn des nachfolgenden T-Bursts ist mithilfe von zwei Parametern einstellbar. Der Abstand at_dist (5) von der Triggerung für die Erzeugung des A-Bursts bis zum Beginn des nachfolgenden T-Bursts ist einstellbar in der Einheit S-cycles. Weiterhin ist die initiale Verzögerung a_initdel (9) von der Triggerung bis zum Beginn des rel. A-Burst (nach obiger Definition) in der Einheit B-cycles einstellbar. Der tatsächliche Abstand vom Beginn des rel. A-Bursts zum Beginn des T-Bursts ist somit at_dist [S_cycles] - a_initdel [B-cycles].

Der Abstand at_dist liegt aus Implementierungsgründen in der Einheit S_cycles vor.

Der Abstand t_burstperiod (6) zwischen den Beginnen zweier aufeinanderfolgender T-Bursts einer Akquisitionsperiode ist aus Implementierungsgründen ebenfalls einstellbar in der Einheit S_cycles.

Der Abstand ta_dist (7) zwischen dem Beginn des letzten T-Bursts einer Akquisitions-Periode und der Triggerung vor Erzeugung des A-Bursts der nächsten Akquisitions-Periode ist ebenfalls einstellbar in der Einheit S-cycles.

Im Sender dürfen die tatsächlichen Abstände aus Implementierungsgründen leicht um ihren nominalen Wert herum schwanken.

Die drei Burst-Abstände sind nicht frei einstellbar sondern müssen der folgenden Forderung genügen:

$$\text{ta\_dist} + \text{at\_dist} = \text{t\_burstperiod}.$$

Der Abstand a_burstperiod (8) zwischen den Beginnen der A-Bursts zweier aufeinanderfolgender Akquisitions-Perioden ist im Sender nicht einstellbar, sondern ergibt sich durch die anderen einstellbaren Parameter:

$$\text{a\_burstperiod [S\_cycles]} = \text{at\_multipl\_len} * \text{t\_burstperiod [S\_cycles]}$$

Die T-Burst-Perioden können beispielsweise in einem Vielfachen von 100 B_samples/Bezugsfrequenz angegeben sein. Um ungünstige wiederkehrende Überlagerungssituationen zu vermeiden, können diese Vielfachen ferner prim zueinander sein. Beispielsweise bieten sich folgende Perioden (in B_samples) an, wenn eine Burst-Periode um die 500 Mikrosekunden sein sollte: 100 B_samples x 463 467 479 487 491 499 503 509 521 523 (eine erste Primzahl wäre erst wieder 541). Die minimale Periode ist somit 454.5 Mikrosekunden (d.h. 2200/s), die maximale Periode ist 513.4 Mikrosekunden (d.h. 1948/s).

Die orthogonalen Sende-Bursts können ferner nach einem Pseudo-Zufallsprinzip entworfen werden, wobei das Pseudo-Zufallsprinzip auf einem Primzahlen-Algorithmus basieren kann. Dabei können erfindungsgemäß dem Sender feste Bursts-Wiederholraten zugewiesen werden, die aber von Sender zu Sender leicht unterschiedlich sind (nicht synchronisierte Pseudo-Zufallsmuster). Dies ist also ein Verfahren, nach dem die Burst-Abstände eines Senders zufällig gewählt werden, damit es kein festes Pattern von Burst-Überlagerungen gibt. Beispielsweise sendet eine Sender 2000 Bursts pro Sekunde, ein weiterer Sender 2001 Bursts pro Sekunde.

Von den zwei im Sender gespeicherten T-Bursts wird immer einer zur Ausstrahlung ausgewählt. Die Auswahl erfolgt mittels eines Bits t_choice, welches mithilfe einer programmierbaren Maske t_choice_mask aus dem Zähler at_multipl_cntr gemäß der folgenden Vorschrift gewonnen wird:

T_choice = (t_choice_mask[0] AND at_multipl_cntr[0]) OR

(t_choice_mask[1] AND at_multipl_cntr[1]

Hierbei stellt variable[0] das Bit Nr. 0 (d.h., das LSB) einer Variablen dar und variable[1] das Bit Nr. 1, und weiterhin stellt AND bzw. OR das bitweise UND bzw. ODER dar.

Besitzt t_choice den Wert 0, so wird der T-Burst 0 ausgestrahlt, bei t_choice==1 wird der T-Burst 1 ausgestrahlt.

- Für t_choice_mask==00(LSB rechts) wird somit stets der T-Burst 0 ausgestrahlt,

- für t_choice_mask==01 wird nach jedem T-Burst zwischen T-Burst 0 und T-Burst 1 gewechselt (beginnend mit T-Burst 0 nach dem A-Burst)

- für t_choice_mask==10 wird nach jedem zweiten T-Burst zwischen T-Burst 0 und T-Burst 1 gewechselt (beginnend mit T-Burst 0 nach dem A-Burst), d.h. es wird ausgestrahlt: T-Burst 0, T-Burst 0, T-Burst 1, T-Burst 1, T-Burst 0, T-Burst 0, T-Burst 1, ...

- t_choice_mask==11 ist keine sinnvolle Wahl und darf nicht eingestellt werden.

Im Sender können zwei Sende-Antennen vorhanden sein. Es können entweder beide gleichzeitig verwendet werden oder nur eine von beiden ausgewählt werden. Sollen beide verwendet werden, so wird ein programmierbares Bit two_ants auf den Wert 1 gesetzt. Ist two_ants==0, so wird immer nur eine der beiden Sende-Antennen zur Ausstrahlung ausgewählt. Die Auswahl erfolgt mittels eines Bits ant_choice, welches mithilfe einer programmierbaren Maske ant_choice_mask aus dem Zähler at_multipl_cntr gemäß der folgenden Vorschrift gewonnen wird:

ant_choice = (ant_choice_mask[0] AND at_multipl_cntr[O]) OR

(ant_choice_mask[l] AND at_multipl_cntr[1]).

Hierbei stellt variable[0] das Bit Nr. 0 (d.h., das LSB) einer Variablen dar und variable[1] das Bit Nr. 1, und weiterhin stellt AND bzw. OR das bitweise UND bzw. ODER dar.

Besitzt ant_choice den Wert 0, so wird auf Antenne 0 ausgestrahlt, bei ant_choice==1 wird auf Antenne 1 ausgestrahlt.

Dies gilt jedoch nur für two_ants==0. Bei two_ants==1 wird jeder Burst auf beiden Antennen ausgestrahlt. Für two_ants==0 ergibt sich folgendes Schema:

- Für ant_choice_mask==00 (LSB rechts) wird somit stets auf Antenne 0 ausgestrahlt,

- für ant_choice_mask==01 wird nach jedem T-Burst zwischen Antenne 0 und Antenne 1 gewechselt (beginnend mit Antenne 0 für den A-Burst und den nachfolgenden T-Burst)

- für ant_choice_mask==10 wird nach jedem zweiten T-Burst zwischen Antenne 0 und Antenne 1 gewechselt (beginnend mit Antenne 0 für den A-Burst und den nachfolgenden T-Burst), d.h. es wird nacheinander ausgestrahlt auf: Antenne 0, Antenne 0, Antenne 1, Antenne 1, Antenne 0, Antenne 0, Antenne 1, ...

- ant_choice_mask==11 ist keine sinnvolle Wahl und darf nicht eingestellt werden.

Wie es bereits erwähnt worden ist, können die T-Bursts ferner dazu herangezogen werden, um eine Übertragung von Daten (von weiteren Informationen), die Bit-weise in die T-Burst eingetastet sind, zu ermöglichen.

Die eingetastete Datenübertragung arbeitet frame-basiert. Ein Frame ist dabei eine Auswahl von Nutzdaten, die zusammen innerhalb eines Zeitabschnitts übertragen werden. Für diese Übertragung werden frame_len T-Bursts benötigt, wobei der Wert frame_len einstellbar ist. Anschließend wird der nächste Frame im folgenden Zeitabschnitt übertragen. Die Auswahl von zu übertragenden Nutzdaten bleibt dabei von Frame zu Frame gleich, nur ihr Inhalt kann sich ändern. Jeder Frame ist in sich abgeschlossen und kann einzeln empfangen und ausgewertet werden, d.h. synchronisiert und decodiert werden.

Im Sender existiert ein Bit oddframeflag, das immer unmittelbar vor der Erzeugung des nächsten Frames gekippt wird (von 0 auf 1 oder von 1 auf 0), d.h. bei geraden Frame-Nummern hat es den Wert 0 und bei ungeraden Frame-Nummern den Wert 1.

Die Zusammenstellung der Daten entspricht dem Auslesen der für die Übertragung ausgewählten Register, wobei diese Auswahl programmierbar ist. Diese Zusammenstellung, d.h. das Auslesen der ausgewählten Register, muss innerhalb möglichst kurzer Zeit abgeschlossen sein. Anschließend liegen die Daten der ausgewählten Register als ein einziger langer Bit-Vektor databitvec vor. Der gesamte Datenumfang, d.h. die Länge von databitvec (in Bits), wird mit nodatabits bezeichnet.

Um cyclic redundancy check bits hinzuzufügen, liefert die folgende Erfindung ferner einen systematischen Encoder.

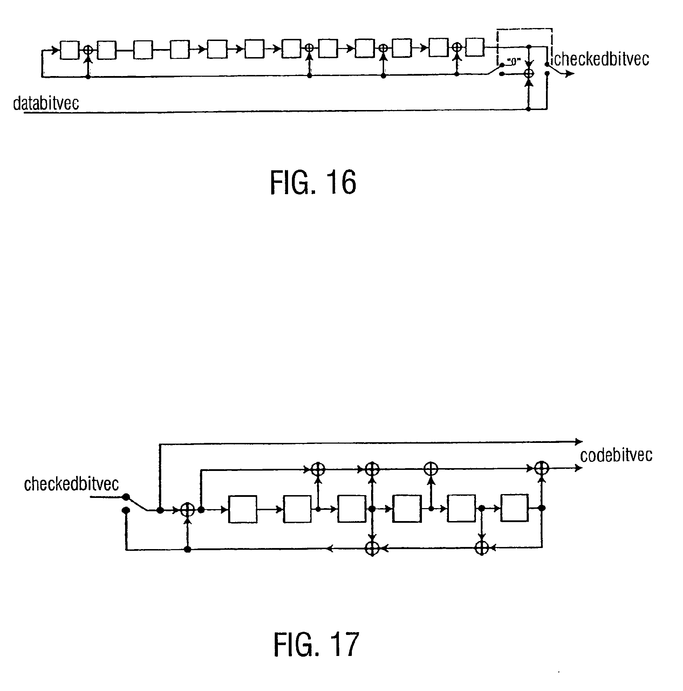

Fig. 16 zeigt ein Block-Diagramm eines systematischen Encoders für CRC-12-Code.

Damit ein Empfänger einen Integritätscheck der empfangenen Daten durchführen und eventuelle Restfehler nach der Kanaldecodierung detektieren kann, werden für die Daten in databitvec die 12 Paritätsbits eines CRC-12-Codes berechnet und hinter das Ende von databitvec angehängt. Der so erzeugte Bit-Vektor wird mit checkedbitvec bezeichnet. Damit ein solcher CRC-12-Code benutzt werden darf, muss nodatabits <=2035 sein.

Der CRC-12-Code wird durch sein Generatorpolynom $g(X) = X^{12}+X^{11}+X^3+X^2+X+1$ charakterisiert.

Der Encoder enthält 12 miteinander verbundene Register für jeweils 1 Bit. Alle Additionen sind binär auszuführen, d.h. 1+1=0 (EXOR). Außerdem sind zwei miteinander gekoppelte Schalter enthalten. Zu Beginn befinden sich beide Schalter in der unteren Stellung. Vor dem Start werden alle 12 Bit-Register auf den Wert 0 initialisiert. Dann werden der Reihe nach die in databitvec enthaltenen Bits an den Eingang angelegt, d.h. pro Takt ein Bit. Am Ausgang werden gleichzeitig die erzeugten Bits von checkedbitvec ausgelesen. Zuerst wird databitvec[0] am Eingang angelegt (Indizierung beginnt mit 0). Am Ausgang wird checkedbitvec[0] ausgelesen. Nach nodatabits -1 Takten wird am Eingang das letzte Eingangs-Bit databitvec[nodatabits-1] angelegt und am Ausgang checkedbitvec[nodatabits-1] ausgelesen. Zum nächsten Takt werden beide Schalter auf die obere Stellung umgelegt Die Leitung unterhalb der Register hat von nun an konstant den Bit-Wert 0. Inklusive dieses Takts wird der Ausgang noch 12 Takte lang ausgelesen und ergibt checkedbitvec [nodatabits] bis checkedbitvec[nodatabits+11]. Dann ist die CRC-Erzeugung beendet.

Der erzeugte Bit-Vektor checkedbitvec hat also insgesamt die Länge nocheckedbits = nodatabits + 12, wobei die ersten nodatabits Bits identisch zum Vektor databitvec sind.

Ferner wird erfindungsgemäß zum Schutz vor Übertragungsfehlern eine Kanalkodierung (forward error correcting code) vorgenommen. Fig. 17 zeigt ein Blockdiagramm eines terminierten rekursiven systematischen Faltungskodierers der Rate 1/2.

Zum Schutz vor Übertragungsfehlern wird eine Kanalencodierung des Vektors checkedbitvec vorgenommen, wobei ein Forward Error Correction Code verwendet wird. Im speziellen ist dies ein terminierter Rekursiver Systematischer Faltungscode der Rate 1/2, der aus dem Industriestandard-Faltungscode abgeleitet wurde [RD2], und der durch seine Generatorpolynome $(1, (x^6+x^3+x^2+x+1) / (x^6+x^5+x^3+x^2+1))$ charakterisiert wird. Durch eine Encodierung des Vektors checkedbitvec entsteht ein Vektor codebitvec aus *Codebits.*

Der Encoder enthält 6 miteinander verbundene Register für jeweils 1 Bit. Alle Additionen sind binär auszuführen, d.h. 1+1=0 (EXOR). ). Zu Beginn befindet sich der enthaltene Schalter in der oberen Stellung. Vor dem Start werden alle 6 Bit-Register auf den Wert 0 initialisiert. Dann werden der Reihe nach die in checkedbitvec enthaltenen Bits an den Eingang angelegt, und zwar alle 2 Takte ein anderes Bit. Die Inhalte der 6 Register dürfen sich ebenfalls nur alle 2 Takte ändern, jeweils wenn ein anderes Bit an den Eingang gelegt wird. Parallel werden nacheinander die beiden Ausgänge ausgelesen, wobei der obere Ausgang zuerst und im nächsten Takt der untere Ausgang ausgelesen wird. Zuerst wird checkedbitvec[0] am Eingang angelegt (Indizierung beginnt mit 0), und zuerst codebitvec[0] (am oberen Ausgang) und im nächsten Takt codebitvec[1] (am unteren Ausgang) ausgelesen. Nach insgesamt zwei Takten wird checkedbitvec[1] am Eingang angelegt, und in aufeinanderfolgenden Takten codebitvec[2] und codebitvec[3] am Ausgang ausgelesen. Nach insgesamt 2*(nocheckedbit-1) Takten wird checkedbitvec[nocheckedbit-1] am Eingang angelegt und am Ausgang codebitvec[2*nocheckedbits-2] und dann codebitvec[2*nocheckedbits-1] ausgelesen. Nach insgesamt 2*nocheckedbits Takten wird der Schalter in die untere Stellung umgelegt. Weiterhin dürfen sich die Register-Inhalte nur alle 2 Takte ändern. Inklusive dieses Takts werden die Ausgänge abwechselnd noch insgesamt 12 Takte lang ausgelesen und ergeben codebitvec[2*nocheckedbits] bis codebitvec[2*nocheckedbits+11]. Dann ist die Kanal-Encodierung beendet. Durch die dargestellte Ausgestaltung des Encoders enthalten alle Register zum Schluss wieder den Bit-Wert 0.

Der erzeugte Bit-Vektor codebitvec hat insgesamt die Länge nocodebits = 2*nocheckedbits + 12, wobei die Bits mit Index 0, 2, 4, ..., 2*(nocheckedbits-1) identisch zum Vektor checkedbitvec sind.

Zum Schutz vor einer Auslöschung mehrerer aufeinanderfolgender Codebits werden die in codebitvec enthaltenen Codebits im Kanal-Interleaver in ihrer Reihenfolge vertauscht. Dabei wird der auszugebende Bit-Vektor ilvedbitvec erzeugt. Der verwendete Interleaver ist ein Modulo-Interleaver. Er führt folgende Veränderungen der Bitreihenfolge durch:

ilvedbitvec[i] - codebitvec[(i * ilvshift) mod nocodebits] für i=0, ..,nocodebits-1
wobei ilvshift ein einstellbarer Wert ist und die Indizierung der Bit-Vektoren mit 0 beginnt.
ilvedbitvec besitzt am Ende die Länge nocodebits (in Bits).

Vor den Beginn von ilvedbitvec wird eine Präambel für die Frame-Synchronisation gesetzt:

- wenn oddframeflag==0, dann wird die Barker-Sequenz 11100010010 als Präambel verwendet

- wenn oddframeflag==1, dann wird die invertierte Barker-Sequenz 00011101101 als Präambel verwendet.

Die führende Präambel mit dem nachfolgenden ilvedbitvec ergibt einen Vektor aus *Channelbits,* der als channelbitvec bezeichnet wird. Seine Länge beträgt frame_len = nocodebits + 11.

Alle frame_len Bits des Vektors channelbitvec werden jeweils *einzeln* in einem T-Burst übertragen, d.h. es werden frame_len T-Bursts zur Übertragung des ganzen Vektors channelbitvec benötigt. Mapping und Sendeimpulsformung jedes Channelbits erfolgt in einem einzigen Schritt, nämlich einer "Eintastung" in einen T-Burst mittels eines Differenziellen Binären Phasenumtast-Direct Sequence Spread Spectrum (DBPSK-DSSS)-Verfahrens.

Jeder T-Burst wird aus zwei Halb-Bursts halfburst1 und halfburst2 erzeugt, die in B_samples (jeweils mit I- und Q-Komponenten) vorliegen.

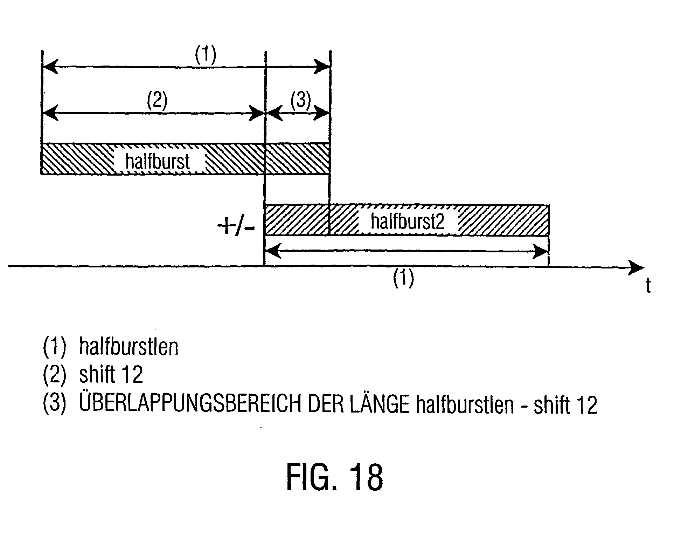

Fig. 18 veranschaulicht die Erzeugung des T-Bursts.

Um den T-Burst zu erzeugen, umfasst die erfindungsgemäße Einrichtung zum Liefern eine Einrichtung zum Erzeugen eines T-Bursts mit eingetastetem Check-Kanal-Bit (channel bit).

Die Halbbursts halfburstl und halfburst2 haben jeweils die Länge halfburstlen (1) (in B_samples). Zur Erzeugung des T-Bursts wird halfburst2 zeitlich verzögert und mit +1 oder -1 gewichtet auf halfburstl aufaddiert. Die zeitliche Verzögerung von halfburst2 bezüglich halfburstl beträgt shift12 (in B_samples). halfburstlen und shift12 haben individuelle Werte für jeden programmierbaren T-Burst.

Der Übergangsbereich, wo halfburstl und der zeitlich um shift12 verzögerte halfburst2 überlappen, ist halfburstlen - shift12 B_samples lang, wobei beim Design der Halbbursts immer die Begrenzung halfburstlen - shift12 <= overlapmaxlen (in B_samples) eingehalten wird.

Die Gewichtung des zeitlich verzögerten halfburst2 bei der Addition auf halfburstl erfolgt nach folgendem Schema:

- besitzt das aktuell zu übertragende Channelbit den Wert 0, so wird +halfburst2 aufaddiert,

- besitzt das aktuell zu übertragende Channelbit den Wert 1, so wird -halfburst2 aufaddiert.

Der T-Burst der Länge t_burstlen = halfburstlen + shift12 für das aktuelle Channelbit ist somit fertig erzeugt und kann ausgestrahlt werden.

Abhängig von den Gegebenheiten können die erfindungsgemäßen Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computer-System zusammenwirken können, dass das entsprechende Verfahren ausgeführt wird. Allgemein besteht die Erfindung somit auch in einem Computer-Programm-Produkt mit auf einem maschinen-lesbaren Träger gespeichertem Programm-Code zur Durchführung der erfindungsgemäßen Verfahren, wenn das Computer-Programm-Produkt auf einem Rechner abläuft. In anderen Worten ausgedrückt, kann die Erfindung somit als ein Computer-Programm mit einem Programm-Code zur Durchführung des Verfahrens realisiert werden, wenn das Computer-Programm auf einem Computer abläuft.

**EP 1 825 631 B1**

**Patentansprüche**

1. Synchronisationsvorrichtung zum Bestimmen einer Position eines Synchronisationssignals in einem Empfangssignal, wobei das Synchronisationssignal auf einem Grobsynchronisationssignal (107) und einem Feinsynchronisationssignal (105) basiert, mit folgenden Merkmalen:

   einer Signalverarbeitungseinrichtung, die ausgebildet ist, um basierend auf dem Grobsynchronisationssignal (107) einen Abschnitt des Empfangssignals, zu bestimmen, in dem das Feinsynchronisationssignal (105) liegt, und um basierend auf dem Feinsynchronisationssignal (105) in dem Abschnitt des Empfangssignals die Position des Synchronisationssignals in dem Empfangssignal für eine Synchronisation zu bestimmen,
   wobei die Signalverarbeitungseinrichtung ausgebildet ist, um das Feinsynchronisationssignal (105) in dem Abschnitt des Empfangssignals zu detektieren, und
   wobei das Synchronisationssignal das Grobsynchronisationssignal (107), welches eine bandbreite aufweist, die geringer als eine Bandbreite des Feinsynchronisationssignals (105) ist, und das Feinsynchronisationssignal (105) umfasst,
   **dadurch gekennzeichnet,**
   **dass** die Signalverarbeitungseinrichtung ein Filter zum Filtern des Empfangssignals umfasst, um eine Empfangssignal-Komponente, die einen Teilfrequenzbereich hat, dessen Bandbreite kleiner als die Bandbreite des Feinsynchronisationssignals (105) ist, aus dem Empfangssignal heraus zu filtern,
   wobei die Signalverarbeitungseinrichtung ausgebildet ist, um den Abschnitt des Empfangssignals unter Verwendung einer Abtastung der Empfangssignal-Komponente mit einer ersten Abtastrate zu bestimmen, und um eine Detektion des Feinsynchronisationssignals (105) unter Verwendung einer Abtastung des Abschnitts des Empfangssignals mit einer zweiten Abtastrate durchzuführen,
   wobei die zweite Abtastrate größer als die erste Abtastrate ist;
   und
   wobei die Signalverarbeitungseinrichtung ausgebildet ist, um eine Korrelation zwischen der Empfangssignal-Komponente und einem mit dem Grobsynchronisationssignal (107) korrelierten Signal durchzuführen, um den Abschnitt zu bestimmen.

2. Synchronisations-Vorrichtung gemäß Anspruch 1, wobei die Signalverarbeitungseinrichtung ausgebildet ist, um das Grobsynchronisationssignal (107) in dem Empfangssignal zu detektieren, um den Abschnitt des Empfangssignals zu bestimmen.

3. Synchronisations-Vorrichtung gemäß einem der Ansprüche 1 bis 2, wobei die Signalverarbeitungseinrichtung ausgebildet ist, um das Grobsynchronisationssignal (107) zum Bestimmen eines Anfangs des Abschnitts des Empfangssignals, in dem das Feinsynchronisationssignal liegt, zu detektieren.

4. Synchronisationsvorrichtung gemäß einem der Ansprüche 1 bis 3, wobei die Signalverarbeitungseinrichtung ausgebildet ist, um eine Korrelation zwischen dem Empfangssignal und einem mit dem Grobsynchronisationssignal (107) korrelierten Signal durchzuführen, um das Grobsynchronisationssignal (107) in dem Empfangssignal zu detektieren, und um eine Korrelation zwischen dem Abschnitt des Empfangssignals und einem mit dem Feinsynchronisationssignal (105) korrelierten Signal durchzuführen, um eine Position des Feinsynchronisationssignals (105) in dem Abschnitt des Empfangssignals zu erfassen.

5. Synchronisations-Vorrichtung gemäß einem der Ansprüche 1 bis 4, wobei die Signalverarbeitungseinrichtung eine erste Detektionseinrichtung (101) und eine zweite Detektionseinrichtung (103) umfasst, wobei die erste Detektionseinrichtung (101) ausgebildet ist, um das Grobsynchronisationssignal (107) in dem Empfangssignal zu detektieren, um den Abschnitt des Empfangssignals zu erfassen, und wobei die zweite Detektionseinrichtung (103) ausgebildet ist, um eine Position des Feinsynchronisationssignals (105) in dem Abschnitt des Empfangssignals zu erfassen.

6. Synchronisations-Vorrichtung gemäß Anspruch 5, wobei die erste Detektionseinrichtung (101) ausgebildet ist, um das Grobsynchronisationssignal (107) mit einer ersten Abtastrate zu detektieren, und wobei die zweite Detektionseinrichtung (107) ausgebildet ist, um die Position des Feinsynchronisationssignals (105) mit einer zweiten Abtastrate zu erfassen, wobei die erste Abtastrate geringer als die zweite Abtastrate ist.

7. Synchronisations-Vorrichtung gemäßt einem der Ansprüche 1 bis 6, wobei das Filter ein Bandpassfilter ist.

8. Synchronisations-Vorrichtung gemäß einem der Anprüche 5 bis 7 wobei die erste Detektionseinrichtung (101) einen

**EP 1 825 631 B1**

Abwärtsmischer zum Abwärtsmischen der Empfangssignal-Komponente aufweist.

9. Synchronisations-Vorrichtung gemäß einem der Ansprüche 5 bis 8, wobei die erste Detektionseinrichtung (101) einen Detektor umfasst, wobei der Detektor ausgebildet ist, um das Grobsynchronisationssignal (107) in der Empfangssignal-Komponente zu detektieren.

10. Synchronisations-Vorrichtung gemäß Anspruch 9, wobei der Detektor ausgebildet ist, um eine Korrelation zwischen der Empfangssignal-Komponente und einem mit dem Grobsynchronisationssignal (107) korrelierten Signal durchzuführen.

11. Synchronisations-Vorrichtung gemäß Anspruch 10, wobei der Detektor ausgebildet ist, um ein Detektionssignal auszugeben, das eine Detektion des Grobsynchronisationssignals (107) anzeigt, wenn ein Wert der Korrelation eine Detektionsschwelle überschreitet.

12. Synchronisations-Vorrichtung gemäß einem der Ansprüche 5 bis 11, wobei die erste Detektionseinrichtung (101) ausgebildet ist, um ein Detektionssignal zu liefern, das einen Detektionszeitpunkt einer Detektion des Grobsynchronisationssignals (107) anzeigt, wobei der Detektionszeitpunkt einen Beginn des Abschnitts des Empfangssignals anzeigt, in dem das Feinsynchronisationssignal (105) liegt, und wobei die zweite Detektionseinrichtung (103) ausgebildet ist, um das Detektionssignal zu empfangen, und um ansprechend auf das Detektionssignal eine Position des Feinsynchronisationssignals (105) in dem Abschnitt des Empfangssignals zu erfassen.

13. Synchronisations-Vorrichtung gemäß einem der Ansprüche 5 bis 12, wobei die zweite Detektionseinrichtung (103) eine Verzögerungseinrichtung (201) zum Verzögern des Empfangssignals umfasst, wobei die Verzögerungseinrichtung (201) ausgebildet ist, um eine Detektionsverzögerung der ersten Detektionseinrichtung (101) zu kompensieren.

14. Synchronisations-Vorrichtung gemäß einem der Ansprüche 5 bis 13, wobei das Feinsynchronisationssignal (105) eine vorbestimmte Bandbreite aufweist, wobei die zweite Detektionseinrichtung (103) einen Filter aufweist, um das Empfangssignal auf die vorbestimmte Bandbreite zu begrenzen.

15. Synchronisations-Vorrichtung gemäß einem der Ansprüche 5 bis 14, wobei die zweite Detektions-einrichtung (103) einen Detektor (203) zum Erfassen einer Position des Feinsynchronisationssignals (105) in dem Abschnitt des Empfangssignals umfasst.

16. Synchronisations-Vorrichtung gemäß Anspruch 15, wobei der Detektor (203) ausgebildet ist, um eine Korrelation zwischen dem Abschnitt des Empfangssignals und einem mit dem Feinsynchronisationssignal (105) korrelierten Signal zu bestimmen, um die Position des Feinsynchronisationssignals (105) zu erfassen.

17. Synchronisations-Vorrichtung gemäß Anspruch 16, wobei der Detektor (203) ausgebildet ist, um eine erste Teilkorrelation zwischen einer ersten Teilmenge von Empfangssignal-Werten in dem Abschnitt des Empfangssignals und einer ersten Teilmenge von Werten des mit dem Feinsynchronisationssignal (105) korrelierten Signals zu bestimmen, und um eine zweite Teil-Korrelation zwischen einer zweiten Teilmenge von Empfangssignal-Werten in dem Abschnitt des Empfangssignals und einer zweiten Teilmenge von Werten des mit dem Feinsynchronisationssignal (105) korrelierten Signals zu bestimmen, und um die Korrelation durch eine Überlagerung der ersten Teil-Korrelation und der zweiten Teil-Korrelation zu bestimmen.

18. Synchronisations-Vorrichtung gemäß Anspruch 17, wobei der Detektor (203) ausgebildet ist, um eine Phase in Beziehung zwischen korrespondierenden Werten der ersten Teil-Korrelation und der zweiten Teil-Korrelation zu erfassen, wobei die Phasen-Beziehung einen FrequenzVersatz zwischen Sender und Empfänger umfasst, und um die Phasen-Beziehung durch eine Gewichtung der Werte der ersten Teil-Korrelation oder der Werte der zweiten Teil-Korrelation zu eliminieren, um einen Einfluss des Frequenz-Versatzes auf Werte der Korrelation zu reduzieren.

19. Synchronisations-Vorrichtung gemäß einem der Ansprüche 16 bis 18, wobei der Detektor (203) einen Interpolator zum Interpolieren zwischen den Werten der Korrelation umfasst, um eine Fein-Korrelation zu erhalten, und um die Position des Feinsynchronisationssignals (105) auf der Basis der Fein-Korrelation mit einer höheren Genauigkeit zu erfassen.

20. Synchronisations-Vorrichtung gemäß einem der Ansprüche 5 bis 19, wobei das Feinsynchronisationssignal (105) eine Information umfasst, wobei die Information durch eine Phasen-Relation zwischen aufeinander folgenden Werten des Feinsynchronisationssignals (105) kodiert ist, und wobei die zweite Detektionseinrichtung (103)ausgebildet ist, um die Information durch Erfassen der Phasen-Beziehung zu detektieren.

21. Synchronisations-Vorrichtung gemäß einem der Ansprüche 16 bis 20, wobei die zweite Detektionseinrichtung (103) ausgebildet ist, um aus der Korrelation Qualitätswerte für eine Empfangsqualität ab zu leiten.

22. Synchronisations-Vorrichtung gemäß einem der Ansprüche 1 bis 21, wobei die zweite Detektionseinrichtung (103) ausgebildet ist, um ein Positionssignal auszugeben, das eine Position des Feinsynchronisationssignals (105) in dem Abschnitt des Empfangssignals anzeigt, um eine Position des Synchronisationssignals in dem Empfangssignal anzuzeigen.

23. Vorrichtung zum Synchronisieren eines Empfängers und eines Senders, wobei der Sender ausgebildet ist, um ein Synchronisationssignal, das auf einem Grobsynchronisationssignal (105) für eine Grob-Synchronisation und auf einem Feinsynchronisationssignal (105) für eine Feinsynchronisation basiert, auszusenden, mit folgenden Merkmalen:

   Einer Abtasteinrichtung zum Abtasten einer Empfangsversion des Synchronisationssignals, um ein Empfangssignal zu liefern;
   einer Synchronisations-Vorrichtung gemäß einem der Ansprüche 1 bis 21, wobei die Synchronisations-Vorrichtung ausgebildet ist, um ein Positionssignal zu liefern, das eine Position des Synchronisationssignals in dem Empfangssignal anzeigt; und
   einer Steuereinrichtung zum Steuern eines AbtastZeitpunktes der Abtast-Einrichtung in Abhängigkeit von dem Positionssignal, um den Empfänger und den Sender zu synchronisieren.

24. Vorrichtung zum Erzeugen eines Synchronisationssignals, das aussendbar ist, um einen Empfänger und einen Sender zu synchronisieren, mit folgenden Merkmalen:

   Einer Einrichtung zum Liefern eines Grobsynchronisationssignls (107) mit einer ersten Bandbreite und eines Feinsynchronisationssignals (105) mit einer zweiten Bandbreite, wobei die erste Bandbreite geringer als die zweite Bandbreite ist; und
   einer Einrichtung zum Bereitstellen des Synchronisationssignals unter Verwendung des Grobsynchronisationssignals (107) und des Feinsynchronisationssignals (105),
   **dadurch gekennzeichnet,**
   **dass** die Einrichtung zum Bereitstellen ein Impulsformungsfilter zum Filtern des Grobsynchronisationssignals (107) und des Feinsynchronisationssignals (105) aufweist, wobei das Impulsformungsfilter eine variable Charakteristik hat, so dass das Feinsynchronisationssignal (105) und das Grobsynchronisationssignal (107) unterschiedlich gefiltert werden.

25. Vorrichtung gemäß Anspruch 24, wobei das Synchronisationssignal das Feinsynchronisationssignal (105) und das Grobsynchronisationssignal (107) umfasst, wobei die Einrichtung zum Bereitstellen ausgebildet ist, um das Feinsynchronisationssignal (105) zeitlich nach dem Grobsynchronisationssignal (107) bereit zu stellen.

26. Vorrichtung gemäß Anspruch 24 oder 25, wobei die Einrichtung zum Bereitstellen ausgebildet ist, um das Feinsynchronisationssignal (105) zeitlich nach dem Grobsynchronisationssignal (107) so bereit zu stellen, dass zwischen einer Bereitstellung des Grobsynchronisationssignals (107) und einer Bereitstellung des Feinsynchronisationssignals (105) ein vorbestimmtes Zeitintervall liegt.

27. Vorrichtung gemäß einem der Ansprüche 24 bis 26, wobei die Einrichtung zum Bereitstellen ausgebildet ist, um eine Mehrzahl von Feinsynchronisationssignalen (105) zeitlich nach dem Grobsynchronisationssignal (107) bereitzustellen.

28. Vorrichtung gemäß Anspruch 27, wobei die Einrichtung zum Bereitstellen ausgebildet ist, um die Mehrzahl von Feinsynchronisationssignalen (105) durch zeitliches Anfügen von Kopien des Feinsynchronisationssignals (105) aneinander bereit zu stellen.

29. Vorrichtung gemäß Anspruch 28, wobei die Einrichtung zum Bereitstellen ausgebildet ist, um zwischen aufeinander folgenden Kopien des Feinsynchronisationssignals (105) ein vorbestimmtes Zeitintervall einzufügen.

30. Vorrichtung gemäß einem der Ansprüche 24 bis 29, wobei das Impulsformungsfilter ein Cosinus-Roll-off-Filter mit einem Roll-off Faktor gleich 1 ist.

31. Vorrichtung gemäß einem der Ansprüche 24 bis 30, wobei die Einrichtung zum Liefern ausgebildet ist, um das Grobsynchronisationssignal (107) aus einer ersten Datenfolge und um das Feinsynchronisationssignal (105) aus einer zweiten Datenfolge zu erzeugen, wobei eine Bandbreite der ersten Datenfolge geringer als eine Bandbreite der zweiten Datenfolge ist,
wobei die Einrichtung zum Liefern einen Generator zum Erzeugen der ersten Datenfolge oder der zweiten Datenfolge umfasst, wobei der Generator ausgebildet ist, um die erste Datenfolge oder die zweite Datenfolge aus einem Galois-Feld zu erzeugen.

32. Vorrichtung gemäß Anspruch 31, wobei die Einrichtung zum Liefern einen Generator zum Erzeugen einer Datenfolge oder zum Erzeugen der weiteren Datenfolge umfasst.

33. Vorrichtung gemäß Anspruch 32, wobei der Generator ausgebildet ist, um die Datenfolge aus einem Galois-Feld mit vier Elementen zu erzeugen, und um die weitere Datenfolge aus einem Galois-Feld zu erzeugen.

34. Vorrichtung gemäß Anspruch 32 oder 33, wobei der Generator ein Schiebe-Register zum Erzeugen der Datenfolge oder zum Erzeugen der weiteren Datenfolge umfasst, wobei der Generator ausgebildet ist, um eine Initialbelegung des Schiebe-Registers einzustellen.

35. Vorrichtung gemäß einem der Ansprüche 31 bis 34, wobei die Einrichtung zum Liefern eine Zuordnungseinrichtung umfasst, um jedem Element der Datenfolge eine komplexwertige Zahl zuzuordnen, um eine komplexwertige Folge zu erhalten, oder um jedem Element der weiteren Datenfolge eine komplexwertige Zahl zuzuordnen, um eine weitere komplexwertige Folge zu erhalten.

36. Vorrichtung gemäß Anspruch 35, wobei die Einrichtung zum Liefern einen Aufwärtsmischer umfasst, um das Grobsynchronisationssignal (107) durch Aufwärtsmischen der komplexwertigen Folge zu erzeugen, oder um das Feinsynchronisationssignal (105) durch Aufwärtsmischen der weiteren komplexwertigen Folge zu erzeugen.

37. Vorrichtung gemäß einem der Ansprüche 24 bis 36, wobei die Einrichtung zum Liefern ausgebildet ist, um ein weiteres Feinsynchronisationssignal, das sich von dem Feinsynchronisationssignal (105) unterscheidet, zu liefern, wobei die Einrichtung zum Bereitstellen ausgebildet ist, um das weitere Feinsynchronisationssignal wie das Feinsynchronisationssignal (105) zu behandeln.

38. Vorrichtung gemäß einem der Ansprüche 24-37, wobei die Einrichtung zum Liefern ausgebildet ist, um eine Information durch eine Phasen-Änderung zwischen aufeinander folgenden Werten des Feinsynchronisationssignals (105) in dem Feinsynchronisationssignal (105) zu kodieren,
wobei die Einrichtung zum Liefern ausgelegt ist, um einen Feinsynchronisations-Burst durch Addieren eines in Abhängigkeit von einem zu übertragenden Bit gewichteten zweiten Halbbursts auf einen ersten Halbburst zu bilden; wobei der zweite Halbburst bezüglich des ersten Halbbursts verzögert ist, so dass sich der erste Halbburst und der zeitlich verzögerte zweite Halbburst zeitlich überlappen.

39. Vorrichtung gemäß Anspruch 38, wobei die Einrichtung zum Liefern ausgebildet ist, um eine Information durch einen Phasensprung um 180 Grad zwischen einer Anzahl von Werten des Feinsynchronisationssignals (105) und einer weiteren Anzahl von Werten des Feinsynchronisationssignals (105) zu kodieren.

40. Synchronisations-Verfahren zum Bestimmen einer Position eines Synchronisationssignals in einem Empfangssignal, wobei das Synchronisationssignal auf einem Grobsynchronisationssignal (107) und einem Feinsynchronisationssignal (105) basiert, mit folgenden Schritten:

Bestimmen eines Abschnitts eines Empfangssignals, in dem das Feinsynchronisationssignal (105) liegt, basierend auf dem Grobsynchronisationssignal (107) ;
Bestimmen der Position des Synchronisationssignals in dem Empfangssignal für eine Synchronisation basierend auf dem Feinsynchronisationssignal (105) in dem Abschnitt des Empfangssignals,
wobei das Bestimmen der Position des Synchronisationssignals in dem Empfangssignal ein Detektieren des Feinsynchronisationssignals (105) in dem Empfangssignal umfasst,
wobei das Synchronisationssignal Grobsynchronisationssignal (107), welches eine Bandbreite aufweist, die geringer als eine Bandbreite des Feinsynchronisationssignals (105) ist, und das Feinsynchronisationssignal (105) umfasst, **dadurch gekennzeichnet,**

**dass** das Empfangssignal gefiltert wird, um eine Empfangssignal-Komponente, die einen Teilfrequenzbereich hat, dessen Bandbreite kleiner als die Bandbreite des Feinsynchronisationssignals (105) ist, aus dem Empfangssignal herauszufiltern,

wobei der Abschnitt des Empfangssignals unter Verwendung einer Abtastung der Empfangssignal-Komponente mit einer ersten Abtastrate bestimmt wird,

wobei eine Detektion des Feinsynchronisationssignals (105) unter Verwendung einer Abtastung des Abschnitts des Empfangssignals mit einer zweiten Abtastrate durchgeführt wird,

wobei die zweite Abtastrate größer als die erste Abtastrate ist,

und

wobei eine Korrelation zwischen der Empfangssignal-Komponente und einem mit dem Grobsynchronisationssignal (107) korrelierten Signal durchgeführt wird, um den Abschnitt zu bestimmen.

41. Verfahren zum Synchronisieren eines Empfängers und eines Senders, wobei der Sender ausgebildet ist, um ein Synchronisationssignal, das auf einem Grobsynchronisationssignal (107) für eine Grob-Synchronisation und auf einem Feinsynchronisationssignal (105) für eine Fein-Synchronisation basiert, auszusenden, mit folgenden Schritten:

Abtasten einer Empfangsversion des Synchronisationssignals, um ein Empfangssignal zu liefern;
Durchführen des Synchronisationsverfahrens gemäß Anspruch 40, um ein Positionssignal zu erhalten, das eine Position des Synchronisationssignals in dem Empfangssignal anzeigt; und
Steuern eines Abtastzeitpunktes in Abhängigkeit von dem Positionssignal, um den Empfänger und den Sender zu synchronisieren.

42. Verfahren zum Erzeugen eines Synchronisationssignals, das aussendbar ist, um einen Empfänger und einen Sender zu synchronisieren, mit folgenden Merkmalen:

Liefern eines Grobsynchronisationssignals (107) mit einer ersten Bandbreite und eines Feinsynchronisationssignals (105) mit einer zweiten Bandbreite, wobei die erste Bandbreite geringer als die zweite Bandbreite ist; und
Bereitstellen des Synchronisationssignals unter Verwendung des Grobsynchronisationssignals (107) und des Feinsynchronisationssignals (105),
**dadurch gekennzeichnet,**
**dass** das Grobsynchronisationssignal (107) und das Feinsynchronisationssignal (105) mit einem Impulsformungsfilter gefiltert werden, wobei das Impulsformungsfilter eine variable Charakteristik hat, so dass das Feinsynchronisationssignal (105) und das Grobsynchronisationssignal (107) unterschiedlich gefiltert werden.

43. Computer-Programm mit einem Programm-Code zur Durchführung des Verfahrens nach Anspruch 40, 41 oder 42, wenn das Programm auf einem Computer abläuft.

**Claims**

1. A synchronization device for determining a position of a synchronization signal in a receive signal, the synchronization signal being based on a coarse synchronization signal (107) and a fine synchronization signal (105), comprising the following features:

a signal processing device configured to determine, based on the coarse synchronization signal (107), a section of the receive signal in which is located the fine synchronization signal (105), and to determine in the section of the receive signal, based on the fine synchronization signal (105), the position of the synchronization signal in the receive signal for a synchronization,
wherein the signal processing device is configured to detect the fine synchronization signal (105) in the section of the receive signal, and
wherein the synchronization signal comprises the coarse synchronization signal (107), which has a bandwidth which is smaller than a bandwidth of the fine synchronization signal (105), and the fine synchronization signal (105),
**characterized in that**
the signal processing device comprises a filter for filtering the receive signal to filter out a receive-signal component, which has a partial frequency range whose bandwidth is smaller than the bandwidth of the fine synchronization signal (105), from the receive signal,

wherein the signal processing device is configured to determine the section of the receive signal by means of a sampling of the receive-signal component at a first sampling rate, and to perform a detection of the fine synchronization signal (105) by means of a sampling of the section of the receive signal at a second sampling rate, the second sampling rate being larger than the first sampling rate,

wherein the signal processing device is configured to perform a correlation between the receive-signal component and a signal correlated with the coarse synchronization signal (107) so as to determine the section.

2. The synchronization device according to claim 1, wherein the signal processing device is configured to detect the coarse synchronization signal (107) in the receive signal so as to determine the section of the receive signal.

3. The synchronization device according to one of the claims 1 to 2, wherein the signal processing device is configured to detect the coarse synchronization signal (107) for determining a start of that section of the receive signal in which is located the fine synchronization signal.

4. The synchronization device according to one of the claims 1 to 3, wherein the signal processing device is configured to perform a correlation between the receive signal and a signal correlated with the coarse synchronization signal (107), to detect the coarse synchronization signal (107) in the receive signal, and to perform a correlation between the section of the receive signal and a signal correlated with the fine synchronization signal (105), to detect a position of the fine synchronization signal (105) in the section of the receive signal.

5. The synchronization device according to one of the claims 1 to 4, wherein the signal processing device includes a first detection device (101) and a second detection device (103), the first detection device (101) being configured to detect the coarse synchronization signal (107) in the receive signal, to detect the section of the receive signal, and the second detection device (103) being configured to detect a position of the fine synchronization signal (105) in the section of the receive signal.

6. The synchronization device according to claim 5, wherein the first detection device (101) is configured to detect the coarse synchronization signal (107) at a first sampling rate, and wherein the second detection device (103) is configured to detect the position of the fine synchronization signal (105) at a second sampling rate, the first sampling rate being lower than the second sampling rate.

7. The synchronization device according to one of the claims 1 to 6, wherein the filter is a band-pass filter.

8. The synchronization device according to one of the claims 5 to 7, wherein the first detection device (101) comprises a down-mixer for down-mixing the receive-signal component.

9. The synchronization device according to one of the claims 5 to 8, wherein the first detection device (101) includes a detector, the detector being configured to detect the coarse synchronization signal (107) in the receive-signal component.

10. The synchronization device according to claim 9, wherein the detector is configured to perform a correlation between the receive-signal component and a signal correlated with the coarse synchronization signal (107).

11. The synchronization device according to claim 10, wherein the detector is configured to output a detection signal which indicates a detection of the coarse synchronization signal (107) when a value of the correlation exceeds a detection threshold.

12. The synchronization device according to one of the claims 5 to 11, wherein the first detection device (101) is configured to provide a detection signal which indicates a time of detection of a detection of the coarse synchronization signal (107), the time of detection indicating a start of that section of the receive signal in which is located the fine synchronization signal (105), and wherein the second detection device (103) is configured to receive the detection signal and to detect, in response to the detection signal, a position of the fine synchronization signal (105) in the section of the receive signal.

13. The synchronization device according to one of the claims 5 to 12, wherein the second detection device (103) includes a delaying device (201) for delaying the receive signal, the delaying device (201) being configured to compensate for a detection delay of the first detection device (101).

14. The synchronization device according to one of the claims 5 to 13, wherein the fine synchronization signal (105) comprises a predetermined bandwidth, the second detection device (103) comprising a filter to limit the receive signal to the predetermined bandwidth.

15. The synchronization device according to one of the claims 5 to 14, wherein the second detection device (103) includes a detector (203) for detecting a position of the fine synchronization signal (105) in the section of the receive signal.

16. The synchronization device according to claim 15, wherein the detector (203) is configured to determine a correlation between the section of the receive signal and a signal correlated with the fine synchronization signal (105) so as to detect the position of the fine synchronization signal (105).

17. The synchronization device according to claim 16, wherein the detector (203) is configured to determine a first partial correlation between a first subset of receive-signal values in the section of the receive signal and a first subset of values of the signal correlated with the fine synchronization signal (105), and to determine a second partial correlation between a second subset of receive-signal values in the section of the receive signal and a second subset of values of the signal correlated with the fine synchronization signal (105), and to determine the correlation by means of an overlap of the first partial correlation and the second partial correlation.

18. The synchronization device according to claim 17, wherein the detector (203) is configured to detect a phase in relation between corresponding values of the first partial correlation and the second partial correlation, the phase relation including a frequency offset between the transmitter and the receiver, and to eliminate the phase relation by weighting the values of the first partial correlation or the values of the second partial correlation, so as to reduce an influence of the frequency offset on values of the correlation.

19. The synchronization device according to one of the claims 16 to 18, wherein the detector (203) includes an interpolator for interpolating between the values of the correlation to obtain a fine correlation and to detect the position of the fine synchronization signal (105), with higher accuracy, on the basis of the fine correlation.

20. The synchronization device according to one of the claims 5 to 19, wherein the fine synchronization signal (105) includes information, the information being coded by a phase relation between successive values of the fine synchronization signal (105), and the second detection device (103) being configured to detect the information by detecting the phase relation.

21. The synchronization device according to one of the claims 16 to 20, wherein the second detection device (103) is configured to derive quality values for a receive quality from the correlation.

22. The synchronization device according to one of the claims 1 to 21, wherein the second detection device (103) is configured to output a position signal which indicates a position of the fine synchronization signal (105) in the section of the receive signal, so as to indicate a position of the synchronization signal in the receive signal.

23. A device for synchronizing a receiver and a transmitter, the transmitter being configured to send out a synchronization signal which is based on a coarse synchronization signal (107) for a coarse synchronization, and on a fine synchronization signal (105) for a fine synchronization, comprising the following features:

a sampling device for sampling a receive version of the synchronization signal to provide a receive signal;
a synchronization device according to one of the claims 1 to 21, the synchronization device being configured to provide a position signal which indicates a position of the synchronization signal in the receive signal; and
a control device for controlling a sampling time of the sampling means in dependence on the position signal so as to synchronize the receiver and the transmitter.

24. A device for generating a synchronization signal which may be sent out to synchronize a receiver and a transmitter, comprising the following features:

a device for providing a coarse synchronization signal (107) having a first bandwidth, and a fine synchronization signal (105) having a second bandwidth, the first bandwidth being smaller than the second bandwidth; and

a means for providing the synchronization signal using the coarse synchronization signal (107) and the fine synchronization signal (105),

**characterized in that**

the means for providing comprises a pulse shaping filter for filtering the coarse synchronization signal (107) and the fine synchronization signal (105), the pulse shaping filter having a variable characteristic so that the fine synchronization signal (105) and the coarse synchronization signal (107) are filtered differently.

25. The device according to claim 24, wherein the synchronization signal includes the fine synchronization signal (105) and the coarse synchronization signal (107), the means for providing being configured to provide the fine synchronization signal (105) temporally after the coarse synchronization signal (107).

26. The device according to claim 24 or 25, wherein the means for providing is configured to provide the fine synchronization signal (105) temporally after the coarse synchronization signal (107) such that there is a predetermined time interval between a provision of the coarse synchronization signal (107) and a provision of the fine synchronization signal (105).

27. The device according to one of the claims 24 to 26, wherein the means for providing is configured to provide a plurality of fine synchronization signals (105) temporally after the coarse synchronization signal (107).

28. The device according to claim 27, wherein the means for providing is configured to provide the plurality of fine synchronization signals (105) by temporally joining copies of the fine synchronization signal (105).

29. The device according to claim 28, wherein the means for providing is configured to introduce a predetermined time interval between successive copies of the fine synchronization signal (105)

30. The device according to one of the claims 24 to 29, wherein the pulse shaping filter is a cosine roll-off filter having a roll-off factor of 1.

31. The device according to one of the claims 24 to 30, wherein the device for providing is configured to generate the coarse synchronization signal (107) from a first data sequence and the fine synchronization signal (105) from a second data sequence, a bandwidth of the first data sequence being smaller than a bandwidth of the second data sequence,
wherein the device for providing comprises a generator for generating the first data sequence or the second data sequence, the generator being configured to generate the first data sequence or the second data sequence from a Galois field.

32. The device according to claim 31, wherein the device for providing comprises a generator for generating a data sequence or for generating the further data sequence.

33. The device according to claim 32, wherein the generator is configured to generate the data sequence from a Galois field with four elements, and to generate the further data sequence from a Galois field.

34. The device according to claim 32 or 33, wherein the generator comprises a shift register for generating the data sequence, or for generating the further data sequence, the generator being configured to set an initial occupation of the shift register.

35. The device according to one of the claims 31 to 34, wherein the device for providing comprises an associating device for associating a complex-valued number with each element of the data sequence so as to obtain a complex-valued sequence, or for associating a complex-valued number with each element of the further data sequence so as to obtain a further complex-valued sequence.

36. The device according to claim 35, wherein the device for providing comprises an up-mixer to generate the coarse synchronization signal (107) by up-mixing the complex-valued sequence, or to generate the fine synchronization signal (105) by up-mixing the further complex-valued sequence.

37. The device according to one of the claims 24 to 36, wherein the device for providing is configured to provide a further fine synchronization signal differing from the fine synchronization signal (105), the means for providing being configured to treat the further fine synchronization signal like the fine synchronization signal (105).

**38.** The device according to one of the claims 24 to 37, wherein the device for providing is configured to encode information by means of a phase change between successive values of the fine synchronization signal (105) in the fine synchronization signal (105), wherein the deice for providing is configured to form a fine synchronization burst by adding a second half-burst, weighted in dependence on a bit to be transmitted, to a first half-burst; wherein the second half-burst is delayed with respect to the first half-burst such that the first half-burst and the temporally delayed second half-burst overlap in time.

**39.** The device according to claim 38, wherein the device for providing is configured to encode information by means of a phase jump by 180° between a number of values of the fine synchronization signal (105) and a further number of values of the fine synchronization signal (105).

**40.** A synchronization method for determining a position of a synchronization signal in a receive signal, the synchronization signal being based on a coarse synchronization signal (107) and a fine synchronization signal (105), comprising the following steps:

determining a section of a receive signal in which is located the fine synchronization signal (105), on the basis of the coarse synchronization signal (107) ;
determining the position of the synchronization signal in the receive signal for a synchronization on the basis of the fine synchronization signal (105) in the section of the receive signal,
wherein determining the position of the synchronization signal in the receive signal comprises detecting the fine synchronization signal (105) in the receive signal,
wherein the synchronization signal comprises the coarse synchronization signal (107), which has a bandwidth which is smaller than a bandwidth of the fine synchronization signal (105), and the fine synchronization signal (105),
**characterized in that**
the receive signal is filtered to filter out a receive-signal component, which has a partial frequency range whose bandwidth is smaller than the bandwidth of the fine synchronization signal (105), from the receive signal,
wherein the section of the receive signal is determined by means of a sampling of the receive-signal component at a first sampling rate,
wherein a detection of the fine synchronization signal (105) by means of a sampling of the section of the receive signal is performed at a second sampling rate, and
wherein the second sampling rate is larger than the first sampling rate.

**41.** A method for synchronizing a receiver and a transmitter, the transmitter being configured to send out a synchronization signal which is based on a coarse synchronization signal (107) for a coarse synchronization, and on a fine synchronization signal (105) for a fine synchronization, comprising the following steps:

sampling a receive version of the synchronization signal so as to provide a receive signal;
performing the synchronization method according to claim 40 to obtain a position signal which indicates a position of the synchronization signal in the receive signal; and
controlling a sampling time in dependence on the position signal so as to synchronize the receiver and the transmitter.

**42.** A method for generating a synchronization signal which may be sent out to synchronize a receiver and a transmitter, comprising the following features:

providing a coarse synchronization signal (107) having a first bandwidth, and a fine synchronization signal (105) having a second bandwidth, the first bandwidth being smaller than the second bandwidth; and
providing the synchronization signal using the coarse synchronization signal (107) and the fine synchronization signal (105),
**characterized in that**
the coarse synchronization signal (107) and the fine synchronization signal (105) are filtered by means of a pulse shaping filter, the pulse shaping filter having a variable characteristic such that the fine synchronization signal (105) and the coarse synchronization signal (107) are filtered differently.

**43.** A computer program having a program code for performing the method according to claims 40, 41 or 42, when the program runs on a computer.

**EP 1 825 631 B1**

**Revendications**

1. Dispositif de synchronisation pour la détermination d'une position d'un signal de synchronisation dans un signal de réception, le signal de synchronisation étant basé sur un signal de synchronisation grossière (107) et sur un signal de synchronisation fine (105), avec les caractéristiques suivantes :

   un dispositif de traitement de signaux conçu pour déterminer, sur la base du signal de synchronisation grossière (107), la section du signal de réception dans laquelle se trouve le signal de synchronisation fine (105) et pour déterminer, sur la base du signal de synchronisation fine (105), dans la section du signal de réception, la position du signal de synchronisation dans le signal de réception pour une synchronisation,
   le dispositif de traitement de signaux étant conçu pour détecter le signal de synchronisation fine (105) dans la section du signal de réception, et
   le signal de synchronisation comprenant le signal de synchronisation grossière (107), qui présente une largeur de bande inférieure à une largeur de bande du signal de synchronisation fine (105), et le signal de synchronisation fine (105),
   **caractérisé en ce que**
   le dispositif de traitement des signaux comprend un filtre permettant de filtrer le signal de réception, afin d'en extraire une composante de signal de réception ayant un domaine de fréquence partiel dont la largeur de bande est inférieure à la largeur de bande du signal de synchronisation fine (105),
   le dispositif de traitement des signaux étant conçu pour déterminer la section du signal de réception à l'aide d'un balayage de la composante du signal de réception avec un premier taux de balayage, et pour effectuer une détection du signal de synchronisation fine (105) à l'aide d'un balayage de la section du signal de réception avec un deuxième taux de balayage, le deuxième taux de balayage étant supérieur au premier taux de balayage ;
   le dispositif de traitement de signaux étant conçu pour réaliser une corrélation entre la composante du signal de réception et un signal corrélé avec le signal de synchronisation fine (107), afin de déterminer la section.

2. Dispositif de synchronisation selon la revendication 1, le dispositif de traitement des signaux étant conçu pour détecter le signal de synchronisation grossière (107) dans le signal de réception afin de déterminer la section du signal de réception.

3. Dispositif de synchronisation selon l'une des revendications 1 à 2, le dispositif de traitement des signaux étant conçu pour détecter le signal de synchronisation grossière (107) afin de détecter le début de la section du signal de réception dans laquelle se trouve le signal de synchronisation fine.

4. Dispositif de synchronisation selon l'une des revendications 1 à 3, le dispositif de traitement des signaux étant conçu pour réaliser une corrélation entre le signal de réception et un signal corrélé avec le signal de synchronisation grossière (107), pour détecter le signal de synchronisation grossière (107) dans le signal de réception et pour réaliser une corrélation entre la section du signal de réception et un signal corrélé avec le signal de synchronisation fine (105), afin de déterminer une position du signal de synchronisation fine (105) dans la section du signal de réception.

5. Dispositif de synchronisation selon l'une des revendications 1 à 4, le dispositif de traitement de signaux comprenant un premier dispositif de détection (101) et un deuxième dispositif de détection (103), le premier dispositif de détection (101) étant conçu pour détecter le signal de synchronisation grossière (107) dans le signal de réception, afin de déterminer la section du signal de réception, et le deuxième dispositif de détection (103) étant conçu pour déterminer une position du signal de synchronisation fine (105) dans la section du signal de réception.

6. Dispositif de synchronisation selon la revendication 5, le premier dispositif de détection (101) étant conçu pour détecter le signal de synchronisation grossière (107) avec un premier taux de balayage et le deuxième dispositif de détection (103) étant conçu pour déterminer la position du signal de synchronisation fine (105) avec un deuxième taux de balayage, le premier taux de balayage étant inférieur au deuxième taux de balayage.

7. Dispositif de synchronisation selon l'une des revendications 1 à 6, le filtre étant un filtre passe-bande.

8. Dispositif de synchronisation selon l'une des revendications 5 à 7, le premier dispositif de détection (101) comprenant un abaisseur de fréquence permettant d'abaisser la fréquence de la composante du signal de réception.

9. Dispositif de synchronisation selon l'une des revendications 5 à 8, le premier dispositif de détection (101) comprenant un détecteur, ce détecteur étant conçu pour détecter le signal de synchronisation grossière (107) dans la composante du signal de réception.

10. Dispositif de synchronisation selon la revendication 9, le détecteur étant conçu pour réaliser une corrélation entre la composante du signal de réception et un signal corrélé avec le signal de synchronisation grossière (107).

11. Dispositif de synchronisation selon la revendication 10, le détecteur étant conçu pour générer un signal de détection qui indique une détection du signal de synchronisation grossière (107) lorsqu'une valeur de la corrélation dépasse un seuil de détection.

12. Dispositif de synchronisation selon l'une des revendications 5 à 11, le premier dispositif de détection (101) étant conçu pour générer un signal de détection qui indique le moment de la détection du signal de synchronisation grossière (107), le moment de détection indiquant le début de la section du signal de réception dans laquelle se trouve le signal de synchronisation fine (105) et le deuxième dispositif de détection (103) étant conçu pour recevoir le signal de détection et pour déterminer, sur la base du signal de détection, une position du signal de synchronisation fine (105) dans la section du signal de réception.

13. Dispositif de synchronisation selon l'une des revendications 5 à 12, le deuxième dispositif de détection (103) comprenant un dispositif de retardement (201) permettant de retarder le signal de réception, le dispositif de retardement (201) étant conçu pour compenser un retard de détection du premier dispositif de détection (101).

14. Dispositif de synchronisation selon l'une des revendications 5 à 13, le signal de synchronisation fine (105) présentant une largeur de bande prédéterminée, le deuxième dispositif de détection (103) comprenant un filtre permettant de limiter le signal de réception à la largeur de bande prédéterminée.

15. Dispositif de synchronisation selon l'une des revendications 5 à 14, le deuxième dispositif de détection (103) comprenant un détecteur (203) permettant de déterminer une position du signal de synchronisation fine (105) dans la section du signal de réception.

16. Dispositif de synchronisation selon la revendication 15, le détecteur (203) étant conçu pour déterminer une corrélation entre la section du signal de réception et un signal corrélé avec le signal de synchronisation fine (105), afin de déterminer la position du signal de synchronisation fine (105).

17. Dispositif de synchronisation selon la revendication 16, le détecteur (203) étant conçu pour déterminer une première corrélation partielle entre une première quantité partielle de valeurs du signal de réception dans la section du signal de réception et une première quantité partielle de valeurs du signal corrélé avec le signal de synchronisation fine (105), pour déterminer une deuxième corrélation partielle entre une deuxième quantité partielle de valeurs du signal de réception dans la section du signal de réception et une deuxième quantité partielle de valeurs du signal corrélé avec le signal de synchronisation fine (105) et pour déterminer la corrélation à l'aide d'une superposition de la première corrélation partielle et de la deuxième corrélation partielle.

18. Dispositif de synchronisation selon la revendication 17, le détecteur (203) étant conçu pour déterminer une phase entre des valeurs correspondantes de la première corrélation partielle et de la deuxième corrélation partielle, la relation de phase comprenant un décalage de fréquence entre l'émetteur et le récepteur et pour éliminer la relation de phase par une pondération des valeurs de la première corrélation partielle ou des valeurs de la deuxième corrélation partielle, afin de réduire l'influence du décalage de fréquence aux valeurs de la corrélation.

19. Dispositif de synchronisation selon l'une des revendications 16 à 18, le détecteur (203) comprenant un interpolateur pour une interpolation entre les valeurs de la corrélation, afin d'obtenir une corrélation fine, et pour déterminer la position du signal de synchronisation fine (105) sur la base de la corrélation fine avec une précision plus importante.

20. Dispositif de synchronisation selon l'une des revendications 5 à 19, le signal de synchronisation fine (105) comprenant une information, cette information étant codée par une relation de phase entre des valeurs successives du signal de synchronisation fine (105) et le deuxième dispositif de détection (103) étant conçu pour détecter l'information par la détermination de la relation de phase.

21. Dispositif de synchronisation selon l'une des revendications 16 à 20, le deuxième dispositif de détection (103) étant conçu pour déduire de la corrélation des valeurs de qualité concernant la qualité de réception.

**22.** Dispositif de synchronisation selon l'une des revendications 1 à 21, le deuxième dispositif de détection (103) étant conçu pour générer un signal de position qui indique une position du signal de synchronisation fine (105) dans la section du signal de réception, afin d'indiquer une position du signal de synchronisation dans le signal de réception.

**23.** Dispositif de synchronisation d'un récepteur et d'un émetteur, l'émetteur étant conçu pour envoyer un signal de synchronisation constitué d'un signal de synchronisation grossière (107) pour une synchronisation grossière et d'un signal de synchronisation fine (105) pour une synchronisation fine, avec les caractéristiques suivantes :

un dispositif de balayage permettant de balayer une version de réception du signal de synchronisation, afin de générer un signal de réception ;
un dispositif de synchronisation selon l'une des revendications 1 à 21, ce dispositif de synchronisation étant conçu pour générer un signal de position qui indique une position du signal de synchronisation dans le signal de réception ; et
un dispositif de commande permettant de contrôler un moment de balayage du dispositif de balayage en fonction du signal de position, afin de synchroniser le récepteur et l'émetteur.

**24.** Dispositif permettant de générer un signal de synchronisation pouvant être envoyé afin de synchroniser un récepteur et un émetteur, avec les caractéristiques suivantes :

un dispositif permettant de générer un signal de synchronisation grossière (107) avec une première largeur de bande et un signal de synchronisation fine (105) avec une deuxième largeur de bande, la première largeur de bande étant inférieure à la deuxième largeur de bande ; et
un dispositif permettant de générer le signal de synchronisation à l'aide du signal de synchronisation grossière (107) et du signal de synchronisation fine (105),
**caractérisé en ce que**
le dispositif de génération comprend un filtre de formation d'impulsions permettant de filtrer le signal de synchronisation grossière (107) et le signal de synchronisation fine (105), le filtre de formation d'impulsions présentant une caractéristique variable, de façon à ce que le signal de synchronisation fine (105) et le signal de synchronisation grossière (107) soient filtrés différemment.

**25.** Dispositif selon la revendication 24, le signal de synchronisation comprenant le signal de synchronisation fine (105) et le signal de synchronisation grossière (107), le dispositif de génération étant conçu pour générer le signal de synchronisation fine (105) de manière retardée par rapport au signal de synchronisation grossière (107).

**26.** Dispositif selon la revendication 24 ou 25, le dispositif de génération étant conçu pour générer le signal de synchronisation fine (105) de manière retardée par rapport au signal de synchronisation grossière (107), de façon à ce qu'un intervalle de temps prédéterminé existe entre une génération du signal de synchronisation grossière (107) et une génération du signal de synchronisation fine (105).

**27.** Dispositif selon l'une des revendications 24 à 26, le dispositif de génération étant conçu pour générer une pluralité de signaux de synchronisation fine (105) de manière retardée par rapport au signal de synchronisation grossière (107).

**28.** Dispositif selon la revendication 27, le dispositif de génération étant conçu pour générer la pluralité de signaux de synchronisation fine (105) par un ajout successif de copies du signal de synchronisation fine (105).

**29.** Dispositif selon la revendication 28, le dispositif de génération étant conçu pour ajouter, entre des copies successives du signal de synchronisation fine (105), un intervalle de temps prédéterminé.

**30.** Dispositif selon l'une des revendications 24 à 29, le filtre de formation d'impulsions étant un filtre en cosinus surélevé avec un facteur de roll-off égal à 1.

**31.** Dispositif selon l'une des revendications 24 à 30, le dispositif de génération étant conçu pour générer le signal de synchronisation grossière (107) à partir d'une première série de données et pour générer le signal de synchronisation fine (105) à partir d'une deuxième série de données, une largeur de bande de la première série de données étant inférieure à une largeur de bande de la deuxième série de données,
le dispositif de génération comprenant un générateur permettant de générer la première série de données ou la deuxième série de données, le générateur étant conçu pour générer la première série de données ou la deuxième série de données à partir d'un champ de Galois.

**32.** Dispositif selon la revendication 31, le dispositif de génération comprenant un générateur permettant de générer une série de données ou de générer la série de données supplémentaire.

**33.** Dispositif selon la revendication 32, le générateur étant conçu pour générer la série de données à partir d'un champ de Galois avec quatre éléments et pour générer la série de données supplémentaire à partir d'un champ de Galois.

**34.** Dispositif selon la revendication 32 ou 33, le générateur comprenant un registre à décalage permettant de générer la série de données ou de générer la série de données supplémentaire, le générateur étant conçu pour ajuster une affectation initiale du registre à décalage.

**35.** Dispositif selon l'une des revendications 31 à 34, le dispositif de génération comprenant un dispositif d'affectation permettant d'affecter à chaque élément de la série de données un nombre complexe, afin d'obtenir une série de valeurs complexes, ou permettant d'affecter à chaque élément de la série de données supplémentaire un nombre complexe afin d'obtenir une série de valeurs complexes supplémentaire.

**36.** Dispositif selon la revendication 35, le dispositif de génération comprenant un élévateur de fréquence afin de générer le signal de synchronisation grossière (107) par élévation de fréquence de la série de valeurs complexes ou de générer le signal de synchronisation fine (105) par élévation de fréquence de la série de valeurs complexes supplémentaire.

**37.** Dispositif selon l'une des revendications 24 à 36, le dispositif de génération étant conçu pour délivrer un signal de synchronisation fine supplémentaire différent du signal de synchronisation fine (105), le dispositif de génération étant conçu pour traiter le signal de synchronisation fine supplémentaire comme le signal de synchronisation fine (105).

**38.** Dispositif selon l'une des revendications 24 à 37, le dispositif de génération étant conçu pour coder une information à l'aide d'un changement de phase entre des valeurs successives du signal de synchronisation fine (105) dans le signal de synchronisation fine (105),
le dispositif de génération étant conçu pour former une salve de synchronisation fine par l'addition d'une de deuxième demi-salve pondérée en fonction d'un bit à transmettre sur une première demi-salve ;
la deuxième demi-salve étant retardée par rapport à la première demi-salve, de façon à ce que la première demi-salve et la deuxième demi-salve retardée se superposent temporellement.

**39.** Dispositif selon la revendication 38, le dispositif de génération étant conçu pour coder une information par un saut de phase de 180 degrés entre un nombre de valeurs du signal de synchronisation fine (105) et un nombre supplémentaire de valeurs du signal de synchronisation fine (105).

**40.** Procédé de synchronisation permettant de déterminer une position d'un signal de synchronisation dans un signal de réception, le signal de synchronisation étant basé sur un signal de synchronisation grossière (107) et sur un signal de synchronisation fine (105), avec les étapes suivantes :

détermination d'une section d'un signal de réception dans laquelle se trouve le signal de synchronisation fine (105), sur la base du signal de synchronisation grossière (107) ;
détermination de la position du signal de synchronisation dans le signal de réception pour une synchronisation basée sur le signal de synchronisation fine (105) dans la section du signal de réception,
la détermination de la position du signal de synchronisation dans le signal de réception comprenant une détection du signal de synchronisation fine (105) dans le signal de réception,
le signal de synchronisation comprenant le signal de synchronisation grossière (107) qui présente une largeur de bande inférieure à une largeur de bande du signal de synchronisation fine (105) et le signal de synchronisation fine (105),
**caractérisé en ce que**
le signal de réception est filtré afin d'extraire du signal de réception une composante du signal de réception qui possède un domaine de fréquence partiel dont la largeur de bande est inférieure à la largeur de bande du signal de synchronisation fine (105),
la section du signal de réception étant déterminée à l'aide d'un balayage de la composante du signal de réception avec un premier taux de balayage,

une détection du signal de synchronisation fine (105) étant effectuée à l'aide d'un balayage de la section du signal de réception avec un deuxième taux de balayage,
le deuxième taux de balayage étant supérieur au premier taux de balayage, et
une corrélation entre la composante du signal de réception et un signal corrélé avec le signal de synchronisation grossière (107) étant réalisée afin de déterminer la section.

41. Procédé de synchronisation d'un récepteur et d'un émetteur, l'émetteur étant conçu pour émettre un signal de synchronisation basé sur le signal de synchronisation grossière (107) pour une synchronisation grossière et sur un signal de synchronisation fine (105) pour une synchronisation fine, avec les étapes suivantes :

balayage d'une version de réception du signal de synchronisation afin de délivrer un signal de réception ;
réalisation du procédé de synchronisation selon la revendication 40, afin d'obtenir un signal de position qui indique une position du signal de synchronisation dans le signal de réception ; et
contrôle d'un moment de balayage en fonction du signal de position, afin de synchroniser le récepteur et l'émetteur.

42. Procédé de génération d'un signal de synchronisation pouvant être émis afin de synchroniser un récepteur et un émetteur, avec les caractéristiques suivantes :

génération d'un signal de synchronisation grossière (107) avec une première largeur de bande et d'un signal de synchronisation fine (105) avec une deuxième largeur de bande, la première largeur de bande étant inférieure à la deuxième largeur de bande ; et
génération du signal de synchronisation à l'aide du signal de synchronisation grossière (107) et du signal de synchronisation fine (105),
**caractérisé en ce que**
le signal de synchronisation grossière (107) et le signal de synchronisation fine (105) sont filtrés avec un filtre de formation d'impulsions, le filtre de formation d'impulsions possédant une caractéristique variable, de façon à ce que le signal de synchronisation fine (105) et le signal de synchronisation grossière (107) soient filtrés différemment.

43. Programme informatique avec un code de programme pour la réalisation du procédé selon la revendication 40, 41 ou 42, lorsque le programme est exécuté sur un ordinateur.

FIG. 1



FIG. 2

FIG. 3

(1) at_dist_B-a_initdel      (4) t_noprecorrvals
(2) a_algoshift+a_pipdel      (5) tX_frontpaddlength-tX_startpadlen
(3) a_predist      (6) recsigdel

FIG. 4

EP 1 825 631 B1

recsigdel = (a_algoshift + a_pipdel + a_predist + t_noprecorrvals +
        t0_frontpaddlength – t0_startpadlen)
        - (at_dist_Brnd – a_initdel),

# FIG. 5

**FIG. 6**

FIG. 7

$$a\_algoshift = \frac{B\_clock}{B\_clock\_4} \quad ...$$

$$+ windowlength\_total * \frac{B\_clock}{B\_clock\_4} \quad ...$$

$$+ a\_burstlen * \frac{B\_clock}{B\_clock\_48} \quad ...$$

$$+ floor(\frac{no\_downsplcoeff}{2} + \frac{no\_downsplcoeff}{2} * \frac{B\_clock}{B\_clock\_4} + ...$$

$$\frac{no\_impcoeff}{2} * \frac{B\_clock}{B\_clock\_16} + \frac{no\_resplcoeff}{2} * \frac{B\_clock}{B\_clock\_4})$$

WOBEI GILT:

no_downsplcoeff=47 (ANZAHL DER FILTERKOEFFIZIENTEN FÜR DAS DOWNSAMPLING)

no_impcoeff=19 (ANZAHL DER FILTERKOEFFIZIENTEN DES MATCHED FILTERS)

no_resplcoeff=47 (ANZAHL DER FILTERKOEFFIZIENTEN FÜR DAS RESAMPLING DES KORRELATIONSSIGNALS)

FIG. 8

EP 1 825 631 B1

FIG. 9

| ELEMENT DER SEQUENZ | KOMPLEXES SYMBOL |
| --- | --- |
| 0 | $1+j$ |
| 1 | $-1+j$ |
| 2 | $-1-j$ |
| 3 | $1-j$ |

FIG. 10

FIG. 11

FIG. 12

FIG. 13a

| FREQUENZBAND NUMMER | FREQUENZ, ALS FUNKTION | FREQUENZ, CA. WERT |
|---|---|---|
| 1 | -5*B_clock_16 | -10,00 MHz |
| 2 | -B_clock_16 | -2,00 MHz |
| 3 | 3*B_clock_16 | 6,00 MHz |
| 4 | -4*B_clock_16 | -8,00 MHz |
| 5 | 0 | 0 |
| 6 | 4*B_clock_16 | 8,00 MHz |
| 7 | -3*B_clock_16 | -6,00 MHz |
| 8 | B_clock_16 | 2,00 MHz |
| 9 | 5*B_clock_16 | 10,00 MHz |

FIG. 13b

FIG. 14

(1) 1 B_cycle_48

(2) 1 B_cycle

(3) GESAMTVERZÖGERUNG BEI DER A-BURST-ERZEUGUNG

(4) VERZÖGERUNG DURCH PIPELINING USW.

(5) KUMULIERTE FILTER-GRUPPENLAUFZEITEN (=KUMULIERTE EINSCHWINGZEITEN)

(6) LÄNGE a_burstlen (IN B_cycles_48) DES ZUGRUNDELIEGENDEN UND DES RELEVANTEN A-BURSTS, WIE ER IM FOLGENDEN BETRACHTET WIRD

(7) KUMULIERTE AUSSCHWINGZEITEN DER FILTER

(8) LÄNGE DES ERZEUGTEN A-BURSTS IN B_samples

(1) a_burstmaxlen    (5) at_dist

(2) a_burstlen        (6) t_burstperiod

(3) t_burstmaxlen    (7) ta_dist

(4) t_burstlen        (8) a_burstperiod

(9) a_initdel

FIG. 15

EP 1 825 631 B1

FIG. 16

FIG. 17

(1) halfburstlen
(2) shift 12
(3) ÜBERLAPPUNGSBEREICH DER LÄNGE halfburstlen - shift 12

# FIG. 18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4803703 A
- EP 1206068 A2

### In der Beschreibung aufgeführte Nicht-Patentliteratur

- **Serdar Boztas ; Roger Hammons ; Vijay Kumar.** 4-Phase-Sequences with near-optimum Correlation Properties. *IEEE Transactions on Information Theory,* Mai 1992, vol. 38 (3), 1101 ff